(19) **Europäisches Patentamt / European Patent Office / Office européen des brevets**

(11) **EP 4 621 731 A1**

(12) **EUROPEAN PATENT APPLICATION**

(43) Date of publication:
24.09.2025 Bulletin 2025/39

(21) Application number: 25163482.0

(22) Date of filing: 13.03.2025

(51) International Patent Classification (IPC):
*G06V 10/62* (2022.01)     *G06V 20/69* (2022.01)

(52) Cooperative Patent Classification (CPC):
G06V 10/62; G06V 20/698

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.03.2024 JP 2024042775
30.08.2024 JP 2024149688

(71) Applicants:
• **CANON KABUSHIKI KAISHA**
**Tokyo 146-8501 (JP)**

• **Canon Medical Systems Corporation**
**Tochigi 324-0036 (JP)**

(72) Inventors:
• **TOBA, Shuhei**
**Tokyo (JP)**
• **YAMAMOTO, Yoji**
**Tokyo (JP)**

(74) Representative: **WESER & Kollegen**
**Patentanwälte PartmbB**
**Radeckestraße 43**
**81245 München (DE)**

(54) **CELL IMAGE ANALYSIS METHOD**

(57)    To provide a highly accurate cell image analysis method, provided is a cell image analysis method including: an image acquisition step of acquiring a time-series cell image group obtained by collecting a plurality of cell images obtained at a plurality of consecutive different timings in association with the timings; a region extraction step of extracting cell candidate regions from the cell images; a region tracking step of collecting, for the cell candidate regions over the plurality of cell images which are included in the time-series cell image group, the cell candidate regions determined to correspond to the same target in association with the timings, and acquiring the determined cell candidate regions as a time-series cell candidate region group; and an analysis step of analyzing information about a state of a cell, wherein the analysis step includes using a trained model.

FIG. 1

EP 4 621 731 A1

**Description**

BACKGROUND OF THE INVENTION

Field of the Invention

The present disclosure relates to a cell image analysis method, a program, a medium, a cell image analysis apparatus, and a cell image analysis system.

Description of the Related Art

In the field of cell culture, cell images are often analyzed to analytically determine a state of a cell, such as whether the cell is live or dead. In particular, a technology of analyzing a cell image through use of machine learning is attracting attention.

In Japanese Patent Application Laid-Open No. 2017-085966, there is disclosed a technology of non-invasively identifying live cells and dead cells from a bright-field image. In this technology, live and dead cells are identified based on a fluorescent image in order to obtain labeled data for machine learning.

In Japanese Patent Application Laid-Open No. 2015-210212, there is disclosed a technology of discriminating whether a cell is live or dead based on morphological features of time-series cell images. In this technology as well, it is described that stained samples are used as labeled data for machine learning.

However, in the related art, there has been still room for improvement in discriminating whether a cell is live or dead.

SUMMARY OF THE INVENTION

The present disclosure has an object to provide a cell image analysis method with which highly reliable labeled data is created.

To achieve the above-mentioned object, according to one aspect of the present disclosure, there is provided a cell image analysis method including: an image acquisition step of acquiring a time-series cell image group obtained by collecting a plurality of cell images obtained at a plurality of consecutive different timings by any one of a bright-field observation method or a phase contrast observation method, in association with the plurality of consecutive different timings; a region extraction step of extracting cell candidate regions from the plurality of cell images included in the time-series cell image group; a region tracking step of determining whether the cell candidate regions over the plurality of cell images associated with mutually different timings which are included in the time-series cell image group correspond to the same target, collecting the cell candidate regions determined to correspond to the same target in association with the timings, and acquiring the determined cell candidate regions as a time-series cell candidate region group; and an analysis step of analyzing information about a state of a cell based on information about the time-series cell candidate region group, wherein the analysis step includes using a trained model, and wherein the trained model is a machine learning model that has been trained, based on information about the time-series cell candidate region group and information about a state of a cell that had been acquired from cells for training, by using the information about the time-series cell candidate region group as input and the information about the state of the cell as output.

Further features of the present invention will become apparent from the following description of exemplary embodiments with reference to the attached drawings.

BRIEF DESCRIPTION OF THE DRAWINGS

FIG. 1 is a processing flow chart of a cell image analysis method according to a first embodiment.
FIG. 2 is a diagram for illustrating an example of a time-series phase contrast image group acquired in Step S101.
FIG. 3 is a diagram for illustrating an example of mask images acquired in Step S102.
FIG. 4 is a diagram for illustrating an example of region tracking results acquired in Step S103.
FIG. 5 is a table for showing an example of a feature value data group calculated in Step S104 and Step S105.
FIG. 6 is a processing flow chart of a trained model generation method in the first embodiment.
FIG. 7 is a diagram for illustrating an example of a time-series phase contrast image group and fluorescent images acquired in Step S601.
FIG. 8 is a table for showing an example of a feature value data group calculated in Step S604 to Step S606.
FIG. 9 is a graph for showing an example of a temporal transition graph of a fluorescence intensity of each time-series cell candidate region group.

FIG. 10 is a table for showing an example of a fluorescence intensity feature value data group of respective time-series cell candidate region groups calculated in Step S606.

FIG. 11 is a table for showing an example of the fluorescence intensity feature value data group of the respective time-series cell candidate region groups subjected to labeling processing.

FIG. 12 is a table for showing an example of the feature value data group of each cell candidate region subjected to the labeling processing.

FIG. 13 is a set of graphs for showing an example of a temporal transition graph of the fluorescence intensity of each time-series cell candidate region group for each label.

FIG. 14 is a table for showing an example of acquiring a binary value for each label by a trained model in Step S106.

FIG. 15 is a table for showing an example of acquiring a likelihood for each label by the trained model in Step S106.

FIG. 16 is a diagram for illustrating an example of a time-series phase contrast image group and fluorescent images acquired in a second modification example of the first embodiment.

FIG. 17 is a data flow chart of stepwise labeling processing in a fourth modification example of the first embodiment.

FIG. 18 is a set of graphs for showing an example of extracting data of a live cell and a dead cell from data labeled a cell changed in a live or dead state in a fifth modification example of the first embodiment.

FIG. 19 is a set of graphs for showing an example of results of carrying out cleansing processing on data labeled non-cells in a sixth modification example of the first embodiment.

FIG. 20 is a processing flow chart of a cell image analysis method according to a second embodiment.

FIG. 21A is a part of figures used to describe input and output to a trained model in the second embodiment, and is a table for showing an example of a feature value data group.

FIG. 21B is a part of the figures used to describe the input and output to the trained model in the second embodiment, and is a table for showing an example of results of extracting time-series feature value data.

FIG. 21C is a part of the figures used to describe the input and output to the trained model in the second embodiment, and is a table for showing an example in which results of the binary values were output.

FIG. 22 is a processing flow chart of a trained model generation method in the second embodiment.

FIG. 23 is a processing flow chart of a cell image analysis method according to a third embodiment.

FIG. 24A is a part of figures for illustrating an example of input data to a trained model in the third embodiment, and is a diagram for illustrating an example of partial cell image groups cut out from respective cell images based on region tracking numbers and cell candidate regions.

FIG. 24B is a part of figures used to describe input and output to a trained model in the third embodiment, and is a table for showing an example in which results of the binary values were output.

FIG. 25 is a processing flow chart of a trained model generation method in the third embodiment.

FIG. 26 is a block diagram for illustrating a hardware configuration example of an information processing device capable of executing a program according to the present disclosure.

FIG. 27 is a diagram for illustrating an example of a time-series phase contrast image group and fluorescent images acquired in a third modification example of the first embodiment.

FIG. 28 is a diagram for illustrating an example of a cell image analysis apparatus.

FIG. 29 is a diagram for illustrating an example of a cell image analysis system.

FIG. 30 is a table for showing an example of results of evaluation of a live cell determination model.

FIG. 31 is a graph for showing results of evaluating an accuracy rate (live cell) for each hour of culture time.

FIG. 32 is a graph for showing results of evaluating an accuracy rate (non-live cell) for each hour of culture time.

FIG. 33 is a table for showing results of calculating evaluation indices for each of a culture time slot of (0 to 11 hours) and a culture time slot of (12 hours or more).

FIG. 34 is a graph for showing results of evaluating the accuracy rate (live cell) for each hour of culture time.

FIG. 35 is a graph for showing results of evaluating the accuracy rate (non-live cell) for each hour of culture time.

DESCRIPTION OF THE EMBODIMENTS

Now, embodiments are described in detail with reference to the accompanying drawings. The embodiments described below do not limit the invention defined in the claims. A plurality of features are described in the embodiments, but the invention does not necessarily require all of those plurality of features, and a plurality of features may be combined as appropriate. Further, in the accompanying drawings, the same or similar components are denoted by the same reference symbols, and redundant description thereof is omitted.

(Problems to be Solved by Cell Image Analysis Method according to this Embodiment)

A state of a cell, such as whether the cell is live or dead, changes over time. For that reason, training data created based only on a fluorescent image at a specific time, as in Japanese Patent Application Laid-Open No. 2017-085966 and Japanese Patent Application Laid-Open No. 2015-210212, causes a machine learning model to be trained through use of data to which inaccurate ground truth labels are assigned. Analysis based on such a machine learning model may lack performance. According to the present disclosure, it is possible to create more reliable labeled data. Through use of the labeled data created according to the present disclosure, it is possible to improve performance of a machine learning model for discriminating the state of a cell. A specific description thereof is as follows.

According to the present disclosure, there is provided a cell image analysis method including: an image acquisition step of acquiring a time-series cell image group obtained by collecting a plurality of cell images obtained at a plurality of consecutive different timings by any one of a bright-field observation method or a phase contrast observation method, in association with the plurality of consecutive different timings; a region extraction step of extracting cell candidate regions from the plurality of cell images included in the time-series cell image group; a region tracking step of determining whether the cell candidate regions over the plurality of cell images associated with mutually different timings which are included in the time-series cell image group correspond to the same target, collecting the cell candidate regions determined to correspond to the same target in association with the timings, and acquiring the determined cell candidate regions as a time-series cell candidate region group; and an analysis step of analyzing information about a state of a cell based on information about the time-series cell candidate region group, wherein the analysis step includes using a trained model, and wherein the trained model is a machine learning model that has been trained, based on information about the time-series cell candidate region group and information about a state of a cell that had been acquired from cells for training, by using the information about the time-series cell candidate region group as input and the information about the state of the cell as output.

The trained model may be configured to acquire the information about the state of the cell based on fluorescence intensity feature value data including at least information about a temporal change in a fluorescence intensity.

In the cell image analysis method, the trained model may be acquired by carrying out, for the cells for training: a fluorescent image acquisition step of acquiring a time-series fluorescent image group obtained by collecting, in association with the timings, fluorescent images corresponding to the plurality of cell images included in the time-series cell image group; a fluorescence intensity feature value calculation step of acquiring fluorescence intensity feature value data of the time-series cell candidate region group based on the time-series fluorescent image group; a labeling processing step of assigning a label relating to the state of the cell to the cell candidate region based on the fluorescence intensity feature value data; and a trained model generation step of generating the trained model through training with the information about the state of the cell based on the label relating to the state of the cell being used as output and the information about the time-series cell candidate region group being used as input, and the fluorescence intensity feature value data may include the information about at least the temporal change in the fluorescence intensity.

The information about the state of the cell may include at least information on a scalar value indicating one of a binary value or a possibility indicating whether the cell candidate region is a live cell region.

Further, the information about the state of the cell may include at least information on a scalar value indicating one of a binary value or a possibility indicating whether the cell candidate region is a differentiated region.

[First Embodiment]

(Overview)

In a first embodiment, a method of acquiring information about the state of the cell by inputting, to the trained model, feature value vectors formed of intensity feature values and morphological feature values calculated from the time-series cell image group obtained by collecting a plurality of cell images photographed by the phase contrast observation method in association with the timings, that is, a time-series phase contrast image group, or formed of feature values relating to temporal changes in the intensity feature value and the morphological feature value, and a method of generating the trained model are described.

As an exemplary application of this embodiment, an example in which a cell sample immediately after seeding of a stem cell (induced pluripotent stem cell (iPS cell) or embryonic stem cell (ES cell)) is subjected to observation and information indicating whether each cell is a "live cell," a "dead cell," or a "non-cell" is acquired as the information about the state of the cell is described. The information about the state of the cell is not limited to those, and may be information indicating whether each cell is a "live cell" or a "dead cell," or information indicating whether each cell is "differentiated" or "pre-differentiated."

(Processing Procedure)

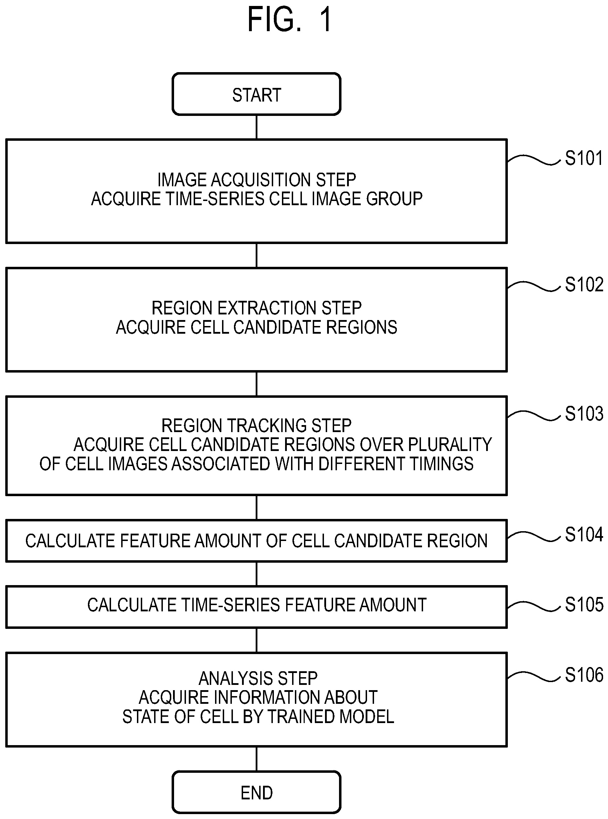

FIG. 1 is a flow chart of a cell image analysis method according to the first embodiment.

(Step S101: Acquisition of Time-series Cell Image Group)

Step S101 is an image acquisition step of acquiring a plurality of cell images photographed by the bright-field observation method or the phase contrast observation method at a plurality of consecutive different timings by a cell culture observation apparatus in association with the timings.

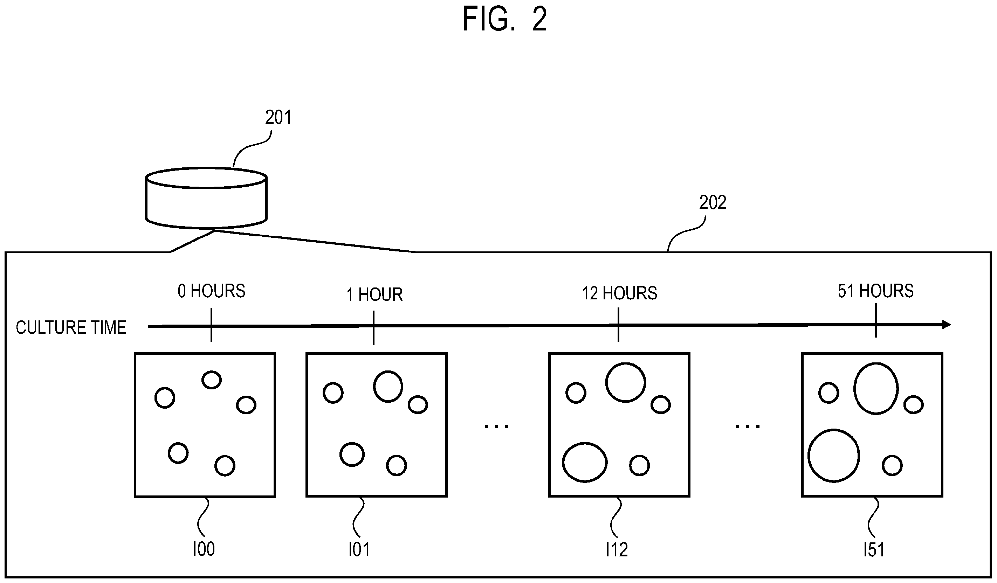

In Step S101, cell image data photographed by the cell culture observation apparatus is acquired. Here, the cell image data is data of time-series phase contrast images photographed at predetermined intervals with respect to one culture vessel for a certain period of time. For example, a time of photographing immediately after the seeding is set as 0 hours, and 52 images are acquired at 1-hour intervals up to 51 hours later. FIG. 2 is a diagram for illustrating an example of acquiring a time-series cell image group 202 with respect to a culture vessel 201. Cell images I00 to I51 correspond to images photographed at respective times of from 0 hours to 51 hours of culture time, respectively.

The image to be acquired in the present step is not limited to the phase contrast image, and may be any image as long as the image has a feature in which contrast of a contour portion of a cell is emphasized with respect to a non-cell region. For example, the present step can be suitably applied to images such as an image picked up in a differential interference optical system, an oblique illumination system, or an optical system in which an object side and an image side are telecentric (both-side telecentric optical system), and a defocused image (bright-field image photographed by shifting from the in-focus position by a fixed distance in the optical-axis direction).

Further, each cell image is preferred to be an image photographed so as to include a common field of view with respect to the culture vessel. In this embodiment, it is assumed that all the cell images I00 to I51 are photographed with the same field of view. The cell image data may be acquired in real time from the cell culture observation apparatus, or may be acquired from an external storage area such as an HDD or cloud storage.

Through the present step, the time-series cell image group indicating a form of each cell photographed by the cell culture observation apparatus is acquired, and the data is output to a module (e.g., region extraction module 2802) for executing Step S102. The wording "information is output" includes a case in which the information is output after having been stored in a storage device.

(Step S102: Acquisition of Cell Candidate Region)

Step S102 is a cell candidate region acquisition step of acquiring cell candidate regions in each of the cell images included in the time-series cell image group acquired in Step S101. The "cell candidate region" as used herein refers to a region of an object having a contour portion emphasized in the phase contrast image acquired in Step S101. Specifically, not only a cell region but also regions of objects such as cell debris and a scratch or an adhering substance on the culture vessel are included. In Step S102, those regions are acquired as cell candidate regions.

The cell candidate region in a phase contrast image can be acquired through use of a publicly known image analysis technology. For example, it is possible to use image processing such as an active contour method or GraphCut, or a trained model in which a deep learning network such as U-Net has been trained through use of a mask image indicating each cell candidate region as a teacher.

In this embodiment, an example in which cell candidate regions are acquired by a differential filter and through binarization processing is described.

First, a differential image is generated by applying a differential filter to a cell image. The differential image is obtained by calculating, for each pixel, an amount of change in intensity value between the pixel and surrounding pixels, and expressing calculated amounts of change as an image. The differential image is, in a case of the cell image, an image that has a high intensity value in contour portions of cell candidate regions and contour portions of cells within the cell candidate regions.

Subsequently, regions having a high intensity value in the differential image are identified by performing binarization processing on the generated differential image. In the binarization processing, any threshold value is set, and a value of each pixel of the differential image is replaced with 1 when the value is equal to or more than the threshold value, and with 0 when the value is less than the threshold value. How the binarization processing is executed is not limited to the method in which any threshold value is set. For example, a method of automatically determining a threshold value such as Otsu's binarization or binarization by Li's algorithm may be used. In a case of setting any threshold value, the threshold value is set so as to suit photographing conditions of the apparatus such as the length of exposure to light and focus settings. A method of determining a threshold for each pixel of an image such as adaptive binarization may also be used. Through the binarization processing, a binary image expressed by setting 1 to pixel values in a region in which a change in intensity value is large and 0 to pixel values in other regions (hereinafter referred to as "edge image") is created.

Subsequently, a mask image of cell candidate regions is generated based on the generated edge image. Here, the mask image is a binary image in which cell candidate regions are expressed by a pixel value of 1 and other regions are expressed by a pixel value of 0. The mask image is generated by extracting regions to which a pixel value of 1 is linked in the edge image, and replacing the pixel values inside each linked region with 1.

In this case, when a size of a target cell can be estimated, in the present step, a range such as an upper limit and a lower limit may be set for a size of the cell candidate region, and cell candidate regions outside the range may be excluded. For example, in a case of a stem cell, regions having an area of 10,000 $\mu m^2$ or more are set to be excluded.

Through the execution of the above-mentioned processing, cell candidate regions in each of the images acquired in Step S101 are acquired.

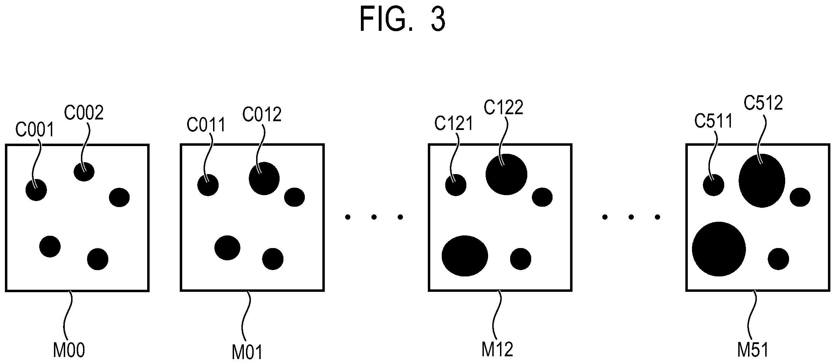

FIG. 3 is a diagram for illustrating an example in which the above-mentioned processing is applied to the respective cell images I00 to I51 of FIG. 2 to acquire mask images M00 to M51. The regions of black pixels in each mask image indicate the respective cell candidate regions. As illustrated in FIG. 3, identifiers such as "C001" and "C002" are assigned thereto so that it is possible to distinguish which cell image each cell candidate region belongs to.

Through the present step, as information indicating the cell candidate regions in each of the cell images included in the time-series cell image group acquired in Step S101, a mask image in which the individual cell candidate regions can be identified and contour coordinate information corresponding to the individual cell candidate regions are acquired, and the acquired information is output to a module (e.g., region tracking module 2803) for executing Step S103.

(Step S103: Tracking of Cell Candidate Region)

Step S103 is a region tracking step of determining, for the cell candidate regions acquired in Step S102, whether or not cell candidate regions over the plurality of cell images associated with different timings are the same region (correspond to the same target), collecting the cell candidate regions determined to correspond to the same target in association with the timings, and acquiring the determined cell candidate regions as a time-series cell candidate region group.

For a cell candidate region acquired in a cell image acquired at a specific timing, that is, associated with a specific timing, it is possible to determine which cell candidate region at the next timing is the same cell candidate region by calculating an overlapping degree between the regions. For example, an overlapping degree "m" between two regions A1 and A2 is calculated by Expression 1.

$$m=S(A1 \cap A2)/MIN(S(A1), S(A2)) \dots \text{Expression 1}$$

In Expression 1, S(A1) and S(A2) represent the areas of the regions A1 and A2, respectively. In addition, S(A1∩A2) represents the area of a region in which the region A1 and the region A2 overlap each other.

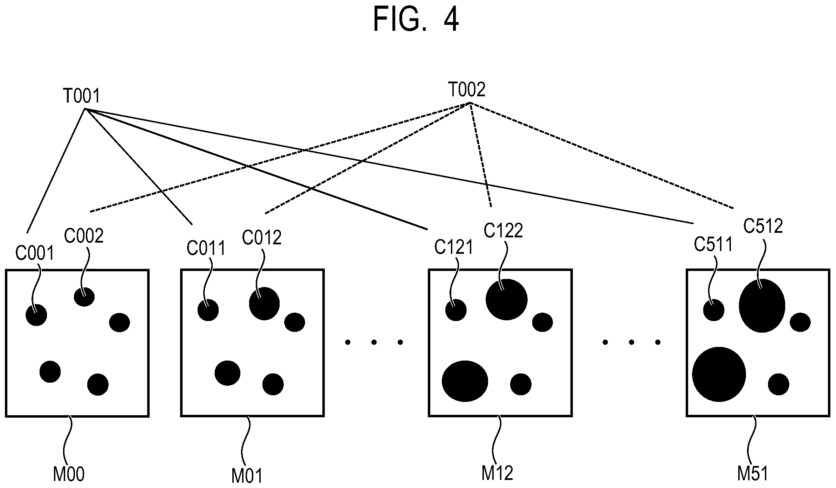

Now, an example in which the cell candidate regions of FIG. 4 are used to determine which cell candidate regions over consecutive cell images are the same region is described below.

First, the overlapping degree "m" between a cell candidate region C001 in a cell image M00 and each cell candidate region in a cell image M01 is calculated, and the cell candidate region in the cell image M01 having the largest overlapping degree and the cell candidate region C001 are regarded as corresponding to the same target. In such a case, those cell candidate regions are said to be the same. In the example of FIG. 4, the cell candidate region C001 and a cell candidate region C011 are determined to be the same region.

Subsequently, for a next cell candidate region C002, in the same manner as for the cell candidate region C001, the overlapping degree "m" with each cell candidate region in the cell image I01 is calculated, and the cell candidate region having the largest overlapping degree is determined to be the same cell candidate region as the cell candidate region C002. At this time, the cell candidate region C011, which has already been determined to be the same as the cell candidate region C001, is excluded from targets.

After that, the same processing is repeatedly carried out on other cell candidate regions and other cell images, to thereby determine which cell candidate regions are the same region over the cell images associated with different timings.

In cell culture, the cell candidate regions also include regions corresponding to a detached adherent cell and floating debris. In that case, it may happen that the same cell candidate region as a cell candidate region at a certain timing is not present at the next timing. Thus, it is also effective to set a threshold value for the overlapping degree and determine that the cell candidate regions are the same when the overlapping degree with the cell candidate region having the largest overlapping degree is equal to or larger than the threshold value. The threshold value is set to, for example, "0.25".

In addition, it is assumed that the regions determined to be the same in the present step are assigned such identifiers as to enable distinction of which cell candidate regions are the same region. FIG. 4 is a diagram for illustrating an example of some of the identifiers assigned as a result of applying the processing of the present step to the cell candidate regions of FIG. 3. The cell candidate regions C001 and C011 and cell candidate regions C121 and C511 are determined to be the same regions as the cell candidate regions C002 and C012 and cell candidate regions C122 and C512, respectively, and identifiers T001 and T002 are assigned thereto. Each identifier assigned to the cell candidate regions corresponding to the same target at different timings such as those shown in FIG. 4 is hereinafter referred to as "region tracking number."

In addition, a group of cell candidate regions associated with different timings to which the same region tracking number is assigned is referred to as "time-series cell candidate region group."

As described above, through the present step, for the cell candidate regions acquired in Step S102, the region tracking numbers each indicating which cell candidate regions are the same cell candidate region at different timings are assigned to the mask images and the contour coordinate information corresponding to the individual cell candidate regions. This information is output to a module for executing Step S104.

As a suitable example, the example in which the overlapping degree is calculated based on Expression 1 to determine whether or not the regions are the same has been described. However, without limitation to Expression 1, the determination may be performed through use of, for example, a publicly known evaluation index relating to the overlapping degree between regions, such as DICE or IoU, or a movement distance of the centroid of the region. It is also possible to apply a publicly known region tracking method, such as a method of calculating an optical flow or a Kalman filter.

(Step S104: Calculation of First Feature value)

Step S104 is a first feature value calculation step of calculating a intensity feature or a morphological feature, or both, of each of the cell candidate regions included in each time-series cell candidate region group acquired up to Step S103.

The intensity feature value does not depend on a temporal change, and is a scalar value obtained by calculating a statistic of an intensity value of the cell candidate region, and examples of the statistic include an average value, a minimum value, and a deviation. The morphological feature is a scalar value obtained by quantifying the size or shape of the cell candidate region, and for example, the area or diameter is calculated. The intensity feature value and the morphological feature value are calculated for each of the cell candidate regions acquired up to Step S103.

The calculated feature values are linked to an identification number of the cell candidate region so that it can be distinguished which cell candidate region the feature values belong to.

Through the present step, a data group of the intensity feature values and the morphological feature values for the respective cell candidate regions acquired up to Step S103 is calculated and acquired, and this information is output to a module for executing Step S105.

The calculated feature values are merely an example. For example, a maximum value or a median value may be calculated as the intensity feature value, and a circularity or a solidity may be calculated as the morphological feature value.

(Step S105: Calculation of Second Feature value)

Step S105 is a second feature value calculation step of calculating a feature value (time-series feature value) indicating a temporal change in the first feature value acquired in Step S104 or positional information based on each of the time-series cell candidate region groups acquired in Step S103.

The second feature value is acquired by, for example, extracting a data group of the first feature values or the positional information of the same cell candidate region at timings during a past fixed period for a cell candidate region at any timing and calculating an amount of change based on linear approximation and an average value of differences between temporally consecutive pieces of data. For example, an amount of change in the diameter based on linear approximation and an average moving amount of barycentric coordinates are calculated based on pieces of data for the past 12 hours. Specifically, an example in which the amount of change in the diameter and the average moving amount of the centroid are calculated for the cell candidate region C121 in the example of FIG. 4 is described.

First, for the cell candidate region C121, diameter data and barycentric coordinates of the cell candidate regions C001 to C011 that are the same for the past 12 hours are acquired. Subsequently, the amount of change in the diameter is calculated based on the acquired diameter data for 12 hours. The amount of change in the diameter may be obtained by regarding the diameter data for 12 hours as a data group formed of two variables of a time and a diameter and calculating a slope when linear approximation is performed by a least-squares method. In addition, the average moving amount is calculated based on the acquired barycentric coordinate data for 12 hours. The average moving amount may be obtained by calculating a Euclidean distance between temporally consecutive pieces of barycentric coordinate data and calculating an average value thereof. Such processing as described above is repeatedly carried out also on other time-series cell candidate region groups, to thereby acquire a second feature value data group of each time-series cell candidate region group.

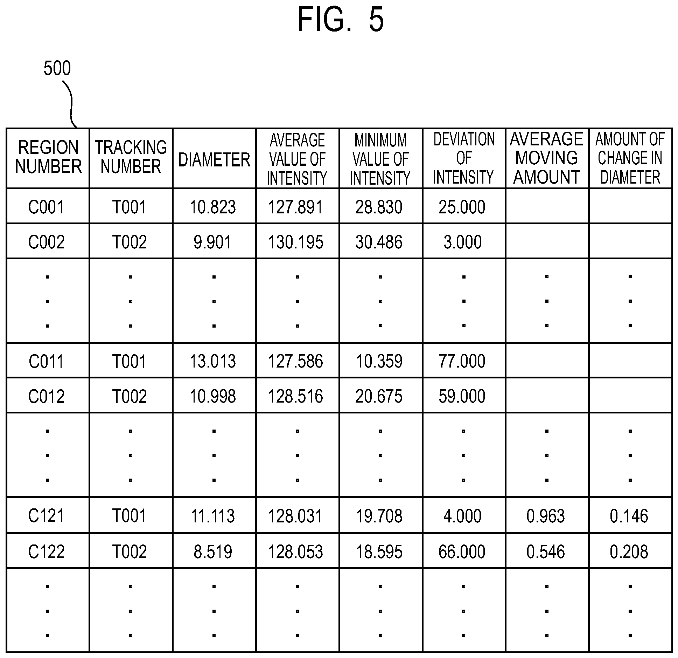

A table 500 of FIG. 5 is an example of results of calculating the first feature value data and the second feature value data in each cell candidate region in FIG. 4.

Through the present step, feature value data including the second feature value that is the feature value indicating the temporal change in the first feature value or the positional information is calculated, and this information is output to a module (e.g., analysis module 2804) for executing Step S106.

As a suitable example, the example in which the second feature value is calculated based on the data for the past 12 hours has been described, but the present disclosure is not limited thereto, and the second feature value may be calculated based on data for the past 4 hours, 6 hours, or the like. Further, the example in which the amount of change in the diameter and the average moving amount are calculated has been described, but the present disclosure is not limited thereto, and an amount of change in the intensity feature value may be calculated, or a variance of data may be calculated instead of the amount of change based on linear approximation or the average value of differences.

(Step S106: Analysis Step)

Step S106 is an analysis step, and in this step, the information about the state of the cell in the cell candidate region is acquired through use of the feature values calculated in Step S105 and Step S104. In this case, the information about the state of the cell in the cell candidate region is, for example, binary values indicating whether the cell candidate region is in a state of the live cell, the dead cell, or the non-cell.

In the present step, a trained model that has been trained in advance so as to use a feature value vector formed of the first feature value obtained in Step S104 and the second feature value obtained in Step S105 as input to output the information about the state of the cell in each cell candidate region is used.

Here, the trained model is a machine learning model that has been trained through use of, as teaching data, results of labeling processing based on information about a fluorescence intensity including at least information about a temporal change in the fluorescence intensity.

A specific trained model generation method is described below.

(Processing Procedure for Generating Trained Model)

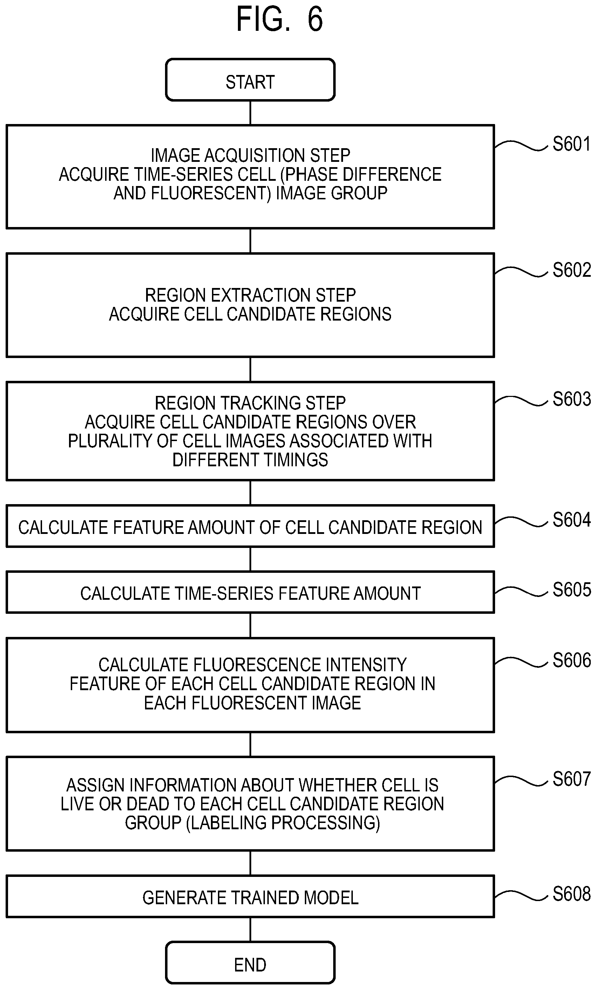

FIG. 6 is a flow chart for illustrating a flow of generating a trained model that is used for the analysis step in the first embodiment. The following steps are performed on cells for training.

(Step S601: Acquisition of Time-series Cell Image Groups)

Step S601 is an image acquisition step of acquiring time-series cell image groups that are used for training the trained model.

In Step S101 described above, phase contrast images photographed at a plurality of consecutive different timings are used as the cell images to acquire the time-series cell image group, but in the present step, in addition thereto, fluorescent images of a cell sample being cells for training which correspond to respective timings are acquired. The phase contrast images and the fluorescent images that are collected in association with the timings may be referred to as "time-series phase contrast image group" and "time-series fluorescent image group," respectively.

In this case, when a trained model that outputs the binary values indicating whether the cell candidate region is in the state of the live cell, the dead cell, or the non-cell is to be generated, phase contrast images are acquired by phase contrast observation of a cell sample to which such a reagent as to exhibit fluorescent properties in each of the live cell and the dead cell is added, and fluorescent images are acquired by fluorescence observation of the cell sample. For example, a reagent that exhibits fluorescent properties in the live cell and a reagent that exhibits fluorescent properties in the dead cell that differ in fluorescent properties from each other can be used to distinguish the live cell and the dead cell from each other.

In another case, when both live cells and dead cells are stained with fluorescent dyes of the same color, images can be acquired by photographing a cell sample to which a staining reagent for dead cells and a staining reagent for live cells are added at different timings.

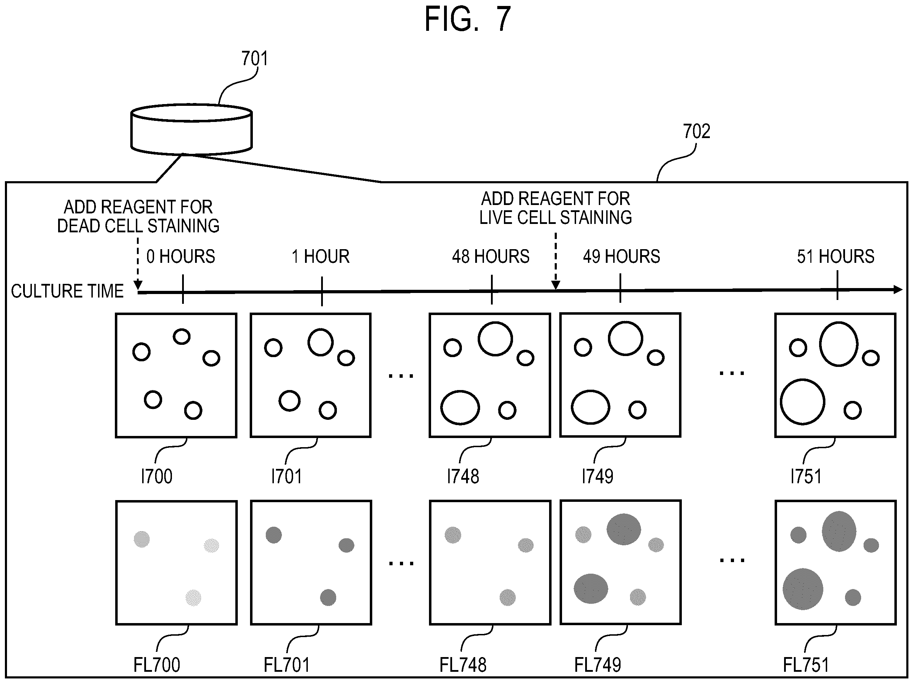

In FIG. 7, an image group 702 is illustrated as an example in which fluorescent dyes of the same color are used for both live cells and dead cells, cells to which a reagent for fluorescently staining dead cells is added are first seeded to photograph the cells up to 48 hours later, and then a reagent for fluorescently staining live cells is added to the cells to photograph the cells up to 51 hours later, to thereby acquire respective phase contrast images and fluorescent images of the cells. An image photographed immediately after the seeding is set as an image at 0 hours of culture time, and phase contrast images I700 to I751 and fluorescent images FL700 to FL751 are acquired at 1-hour intervals up to 51 hours later.

Through the present step, the time-series phase contrast image group and the time-series fluorescent image group of the cell sample corresponding to the respective times are acquired, and this information is output to a module for executing Step S602.

(Step S602 to Step S605)

The processing steps of from Step S602 to Step S605 are the same as the above-mentioned processing steps of from Step S102 to Step S105 which are applied to the time-series phase contrast image group acquired in Step S601, and hence description thereof is omitted.

Through the processing steps of from Step S602 to Step S605, such a feature value data group as shown in FIG. 5 is calculated from the time-series phase contrast image group acquired in Step S601, and this information is output to a module for executing Step S606.

(Step S606)

Step S606 is a fluorescence intensity feature value calculation step of calculating a feature value relating to the fluorescence intensity in the time-series cell candidate region group based on the fluorescent images acquired in Step S601 and the respective cell candidate regions and region tracking numbers acquired in Step S602 to Step S605.

First, an average value of the fluorescence intensity in each cell candidate region is calculated from the respective fluorescent images acquired in Step S601. In this case, when the fluorescent image is an RGB color image, the average value may be calculated for the intensity value of a color component corresponding to the fluorescent dye that has stained the cell sample. As described in Step S601, when the sample is stained with a green fluorescent dye, the average value of the intensity of the G component is calculated.

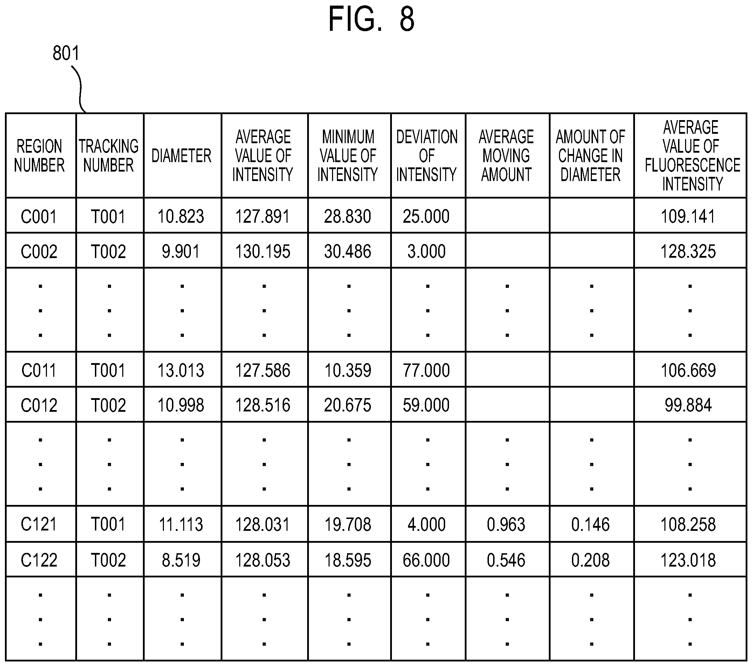

In FIG. 8, a table 801 is shown as an example in which the average value of the fluorescence intensity in each cell candidate region was calculated. Average value data of the fluorescence intensity is added to such a feature value data group calculated from the phase contrast images as shown in FIG. 5. The average value of the fluorescence intensity is hereinafter simply referred to as "fluorescence intensity."

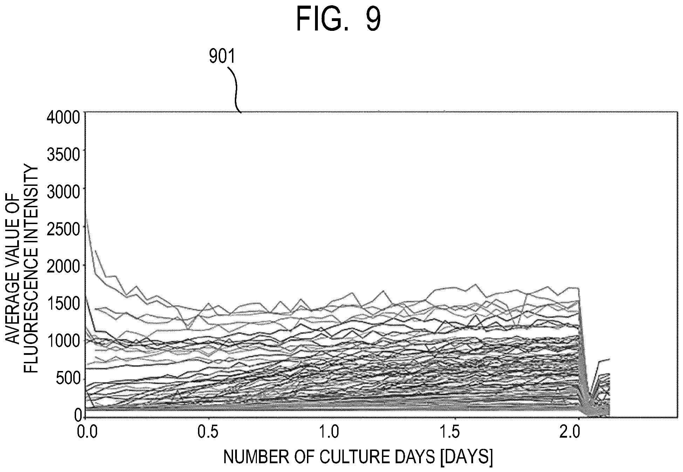

In this case, when the cell sample in which dead cells and live cells are stained with fluorescent dyes of the same color at different timings is used as in the example of FIG. 7, each fluorescence intensity calculated from the fluorescent images FL749 to FL751 is obtained by adding a fluorescence intensity due to the staining of dead cells to a fluorescence intensity due to the staining of live cells. Thus, it is preferred to obtain the fluorescence intensity of each live cell by subtracting the fluorescence intensity due to the staining of dead cells from the fluorescence intensity calculated from the fluorescent images after the live cell staining. For example, in the example of FIG. 7, from the fluorescence intensity of each of the cell candidate regions calculated from the fluorescent images FL749 to FL751 at 49 hours or later, the fluorescence intensity of the same cell candidate region calculated from the fluorescent image FL748 at the time point of 48 hours may be subtracted. In FIG. 9, a graph 901 of a temporal transition of the fluorescence intensity in each time-series cell candidate region group in a state subjected to the above-mentioned subtraction processing is shown. The horizontal axis indicates the number of culture days, the vertical axis indicates the fluorescence intensity, and each line represents each time-series cell candidate region group.

Subsequently, a fluorescence intensity feature value of each time-series cell candidate region group is calculated through use of the fluorescence intensity of each cell candidate region calculated as in the table 801 of FIG. 8. Here, the fluorescence intensity feature value is a feature value for assigning a label relating to the state of a cell in the cell candidate region, such as a "live cell," a "non-cell," a "dead cell," or a "cell changed in the live or dead state" to each time-series cell candidate region group in the labeling processing described later. Thus, the fluorescence intensity feature value is desired to be a feature value useful for distinguishing those from each other. For example, four types of scalar values, namely, a "fluorescence intensity at the beginning of dead cell staining," a "fluorescence intensity at the end of dead cell staining," a "maximum value of the amount of change in the fluorescence intensity due to dead cell staining," and a "maximum value of the fluorescence intensity due to live cell staining" are calculated in the cell candidate region corresponding to each time-series cell candidate region group. For each of the "fluorescence intensity at the beginning of dead cell staining" and the "fluorescence intensity at the end of dead cell staining," data of the fluorescence intensity of the cell candidate region in the cell image at the corresponding timing may be extracted in accordance with a timing at which live cells were stained. For example, in the example of FIG. 7, the fluorescence intensities at the respective timings of 0 hours and 48 hours are extracted. For the "maximum value of the amount of change in the fluorescence intensity due to dead cell staining," in the same manner as in the method described in Step S105, the amount of change in the fluorescence intensity may be obtained by linearly approximating a fluorescence intensity data group for the past 12 hours prior to any timing and setting a slope thereof as the amount of change. The amounts of change in the fluorescence intensity of the time-series cell candidate region group at the respective timings are calculated, and a maximum value thereof is acquired. As the "maximum value of the fluorescence intensity due to live cell staining," the maximum value may be acquired from fluorescence intensity data after the timing at which live cells were stained.

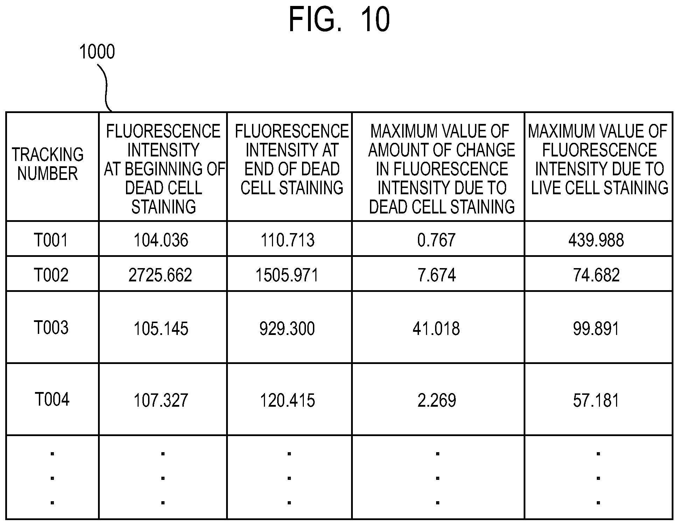

In FIG. 10, a table 1000 is shown as an example in which fluorescence intensity feature values of respective time-series cell candidate region groups were calculated from such data of respective cell candidate regions including fluorescence intensities as shown in FIG. 8. The fluorescence intensity feature value was calculated for each time-series cell candidate region group having the same tracking number.

As described above, through the present step, the feature value relating to the fluorescence intensity is calculated for the cell candidate region corresponding to each time-series cell candidate region group, and this information is output to a module for executing Step S607.

The example in which the four types of scalar values are calculated as the fluorescence intensity feature value has been described, but the scalar values calculated as the fluorescence intensity feature value are not limited thereto. For example, statistics such as an average value, a deviation, a minimum value, and a maximum value of the fluorescence intensity due to dead cell staining in each time-series cell candidate region group may be calculated.

(Step S607)

Step S607 is a labeling processing step of assigning the information about the state of the cell to each time-series cell candidate region group based on the fluorescence intensity feature value calculated in Step S606. Here, the information about the state of the cell is a ground truth label that serves as a teacher for training a trained model described later.

First, such a fluorescence intensity feature value data group acquired in Step S606 as shown in FIG. 10 is divided into data groups of a freely-set number of clusters by an unsupervised clustering method. Here, it can be expected that each time-series cell candidate region group is any one of the four types of a "live cell," a "non-cell," a "dead cell," and a "cell changed in the live or dead state." Thus, a publicly known unsupervised clustering method may be applied with the freely-set number of clusters being set to four. For example, hierarchical clustering is applied. The present disclosure is not limited thereto, and a method such as K-means can also be applied.

Subsequently, labeling processing for determining whether each of the clusters obtained through division by unsupervised clustering corresponds to "live cells," "non-cells," "dead cells," or "cells changed in the live or dead state" is performed. The labeling processing may be carried out on a rule basis based on the average value of each piece of fluorescence intensity feature value data for each cluster. First, when the time-series cell candidate region group is a "dead cell," it can be expected that both the "fluorescence intensity at the beginning of dead cell staining" and the "fluorescence intensity at the end of dead cell staining" have large numerical values. Thus, of the data groups of the fluorescence intensity feature value belonging to the clusters, the average values of the "fluorescence intensity at the beginning of dead cell staining" and the "fluorescence intensity at the end of dead cell staining" are calculated, and the cluster having the largest average value is determined to be "dead cells." Subsequently, when the time-series cell candidate region group is a "cell changed in the live or dead state," it can be expected that there is a temporal change in the fluorescence intensity due to dead cell staining. Thus, of the data groups of the fluorescence intensity feature value belonging to the clusters, the average value of the "maximum value of the amount of change in the fluorescence intensity due to dead cell staining" is calculated, and the cluster having the largest average value is determined to be "cells changed in the live or dead state." Further, when the time-series cell candidate region group is a "live cell," it can be expected that the "fluorescence intensity due to live cell staining" is a large numerical value. Thus, of the data groups of the fluorescence intensity feature value belonging to the clusters, the average value of the "maximum value of the fluorescence intensity due to live cell staining" is calculated, and the cluster having the largest average value is determined to be "live cells." Finally, the remaining cluster is determined to be "non-cells."

A method of labeling each cluster on a rule basis is not limited to the above-mentioned method. For example, instead of performing the labeling in order of "dead cells," "cells changed in the live or dead state," "live cells," and "non-cells," the labeling may be performed in order of "cells changed in the live or dead state," "dead cells," "live cells," and "non-cells." It can also be expected that the "non-cell" is small in both "staining intensity of the live cell" and "staining intensity of the live cell." Thus, processing for assigning the label "non-cell" so that, of the data groups of the fluorescence intensity feature value belonging to the clusters, the average values of the "fluorescence intensity at the end of dead cell staining" and the "maximum value of the fluorescence intensity due to live cell staining" are calculated to determine the cluster having the smallest average value to be "non-cells" may be included.

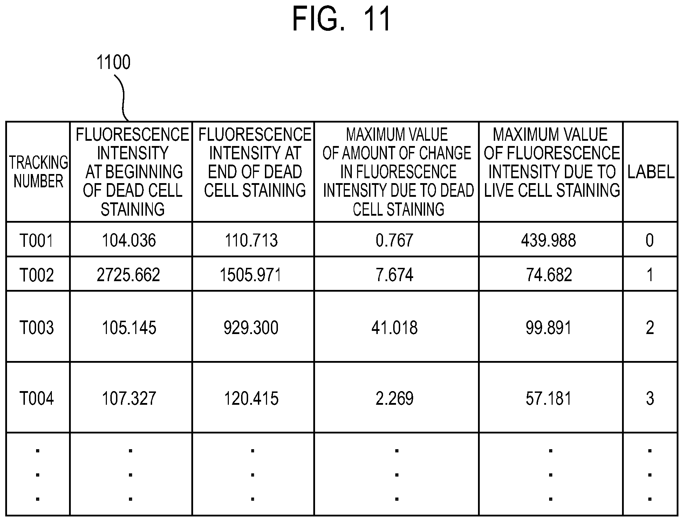

Through the above-mentioned processing, it is determined whether each cluster corresponds to "live cells," "non-cells," "dead cells," or "cells changed in the live or dead state," and a label corresponding thereto is assigned also to each time-series cell candidate region group belonging to each cluster as the information about the state of the cell. Further, with reference to the region tracking number and the label of FIG. 11, the label can also be assigned to each cell candidate region in such a feature value data group of the respective cell candidate regions as shown in FIG. 8.

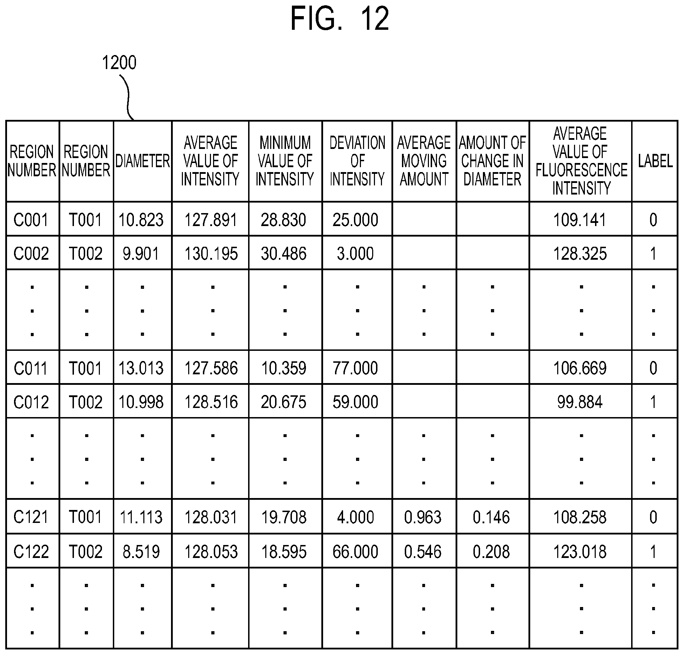

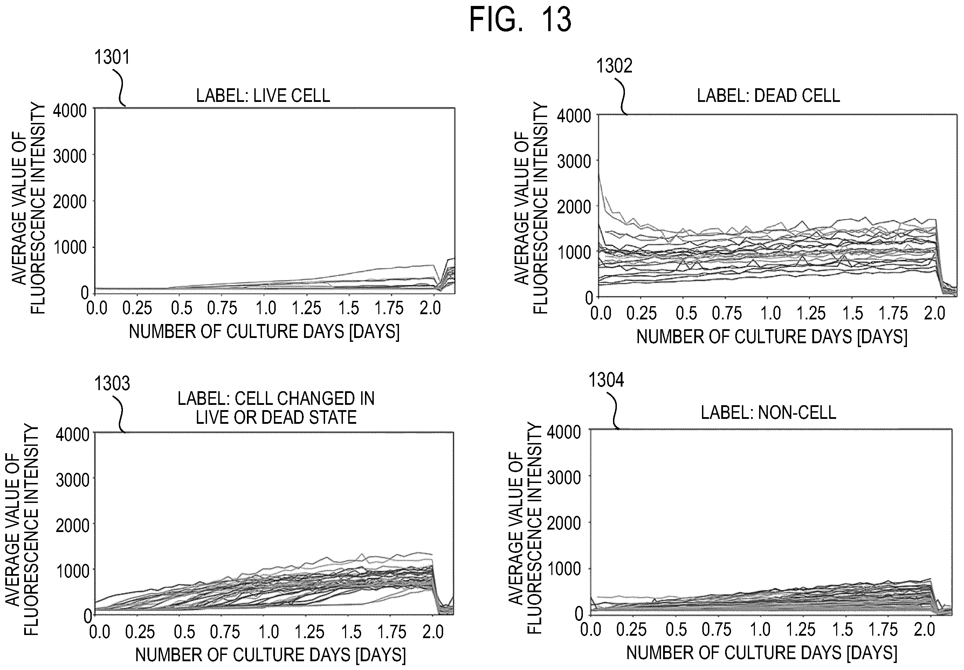

FIG. 11 is a table for showing results of applying the above-mentioned labeling processing to the fluorescence intensity feature value data group of the time-series cell candidate region groups of FIG. 10. A label column in a table 1100 indicates whether each group is a "live cell," a "non-cell," a "dead cell," or a "cell changed in the live or dead state," and the labels have been converted into scalar values "0", "1", "2", and "3", respectively. Further, a table 1200 of FIG. 12 is a table for showing results of assigning the labels also to the respective cell candidate regions of FIG. 8 with reference to the region number and the label of FIG. 11. FIG. 13 is a set of graphs plotted so that the graph of FIG. 9 for showing the temporal transition of the fluorescence intensity of each time-series cell candidate region group is divided based on the results of the labeling processing. Graphs 1301, 1302, 1303, and 1304 show the temporal transitions of the fluorescence intensities of the respective time-series cell candidate region groups labeled "live cell," "dead cell," "cell changed in the live or dead state," and "non-cell," respectively.

As described above, through the present step, the feature value data group of each cell candidate region to which the information about the state of the cell has been assigned is output to a module for executing Step S608.

(Step S608: Generation of Trained Model)

Step S608 is a trained model generation step of generating a trained model based on the feature value data group of each cell candidate region to which the information about the state of the cell which has been acquired in Step S607 has been assigned.

In the present step, a trained model is generated by training a machine learning model that uses the feature value vector formed of the respective feature values calculated from the phase contrast images as input and the labels assigned in Step S607 as a teacher to output the binary values indicating whether the cell candidate region is in the state of the live cell, the dead cell, or the non-cell. In the example of FIG. 12, the respective feature values calculated from the phase contrast images are the diameter, the average value of the intensity, the minimum value of the intensity, the deviation of the intensity, the average moving amount, and the amount of change in the diameter. Further, the trained model is a structure and parameters of a model optimized based on training data so that the binary value indicating a ground truth data label is obtained with the feature value vector being used as input.

In this case, in regard to the data acquired as shown in FIG. 12, data assigned the label "2" is a "cell changed in the live or dead state" when the temporal change of the same cell is observed, and is highly likely to include an ambiguous state as to whether the cell is a live cell or a dead cell. Data including such an ambiguous state causes a decrease in performance of the machine learning model that classifies live cells and dead cells. For that reason, data excluding the data assigned the label "2" is used as the training data to generate a trained model.

It suffices that the machine learning model is such a machine learning model as to use the feature value vectors as input to perform classification into a freely-set number of classes, and as an example thereof, a method such as XGBoost is used. The present disclosure is not limited thereto, and it is also possible to employ a model such as a neural network, a support vector machine (SVM), a random forest, LightGBM, or a Gaussian mixture model. Further, a method of optimizing the structures and parameters of those models based on those pieces of training data can also be carried out by a publicly known optimization method. For example, in a case of XGBoost, the optimization is performed by a method such as a grid search or Bayesian optimization.

In a case of carrying out two-class classification into the state of the "live cell" and the "other" state instead of the states of the "live cell," the "dead cell," and the "non-cell," an anomaly detection-based model can also be used. For example, it is possible to use a model that performs fitting to a probability density distribution such as kernel density estimation. The anomaly detection-based model is suitable for two-class classification when there is an extremely large amount of training data for the other class.

The method of generating a trained model in the analysis step in the first embodiment has been described above.

The example of acquiring such images acquired in a freely-selected culture vessel 701 as illustrated in FIG. 7 in Step S601 has been described, but when it is possible to acquire images of different fields of view or samples to which staining and cell image photographing have been carried out in a similar procedure, it is also suitable to use those images as well to generate a trained model. In that case, it suffices that the processing steps of from Step S601 to Step S607 are repeatedly carried out on data of different samples or different fields of view, and such data obtained after each iteration as shown in FIG. 12 is compiled as one set of training data to then generate a trained model.

(Step S106: Analysis Step)

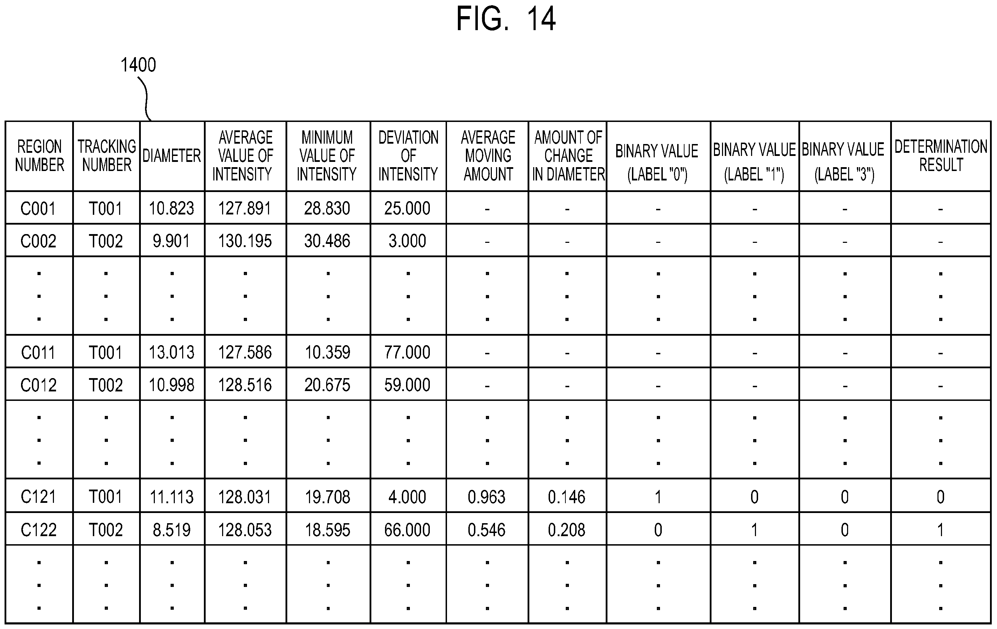

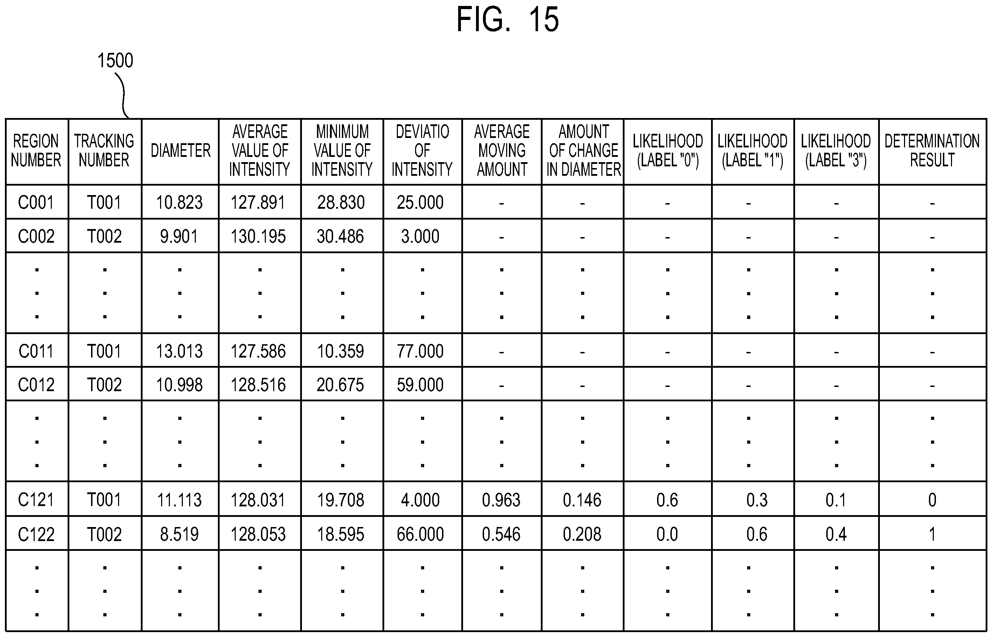

In Step S106, such a feature value vector of each cell candidate region as shown in FIG. 5 is input to the trained model generated in Step S601 to Step S608, and the information about the state of the cell in each cell candidate region is acquired. Specifically, in a case of the trained model obtained in the example illustrated in Step S601 to Step S608, the binary values indicating whether the cell candidate region is in the state of the "live cell," the "dead cell," or the "non-cell" can be obtained as an output result. FIG. 14 is a table for showing the binary values obtained by inputting the feature value vector of each cell candidate region of FIG. 5. The "live cell," the "dead cell," and the "non-cell" correspond to the labels "0", "1", and "3", respectively. For example, the cell candidate region C121 has "1" as the binary value corresponding to the label "0", and a determination result that the cell candidate region C121 is in the state of the "live cell" is obtained. Instead of the binary value, a likelihood calculated during the process in which the machine learning model outputs the binary value may be acquired. FIG. 15 is a table for showing an example of acquiring likelihoods instead of the binary values.

As described above, through Step S106, the feature value vector formed of the first feature value obtained in Step S104 and the second feature value obtained in Step S105 is input to the trained model to acquire the information about the state of the cell in each cell candidate region.

(Output of Results)

The cell image analysis method may further include a display control step of displaying, on a display, table information including the output results from the trained model for the respective cell candidate regions, such as a table 1400 shown in FIG. 14 or a table 1500 shown in FIG. 15, and graphs of temporal transitions of the binary values or the likelihoods for the respective time-series cell candidate region groups. The output results from the trained model are also preferred to be displayed in a format of a time-lapse image in which the cell candidate region is drawn, a time-lapse video generated based on the time-lapse image, or a heat map image in addition to the table information shown in FIG. 14 or FIG. 15. For example, a time-lapse image in which the contour of the cell in the cell candidate region is drawn on the phase contrast image at each timing by changing a display mode in accordance with the determination result from the trained model is displayed. The wording "changing the display mode" as used herein means that the display mode is only required to be different for each determination result to an extent that the determination result from the trained model can be grasped. Examples of changing the display mode include color-coding the contour, changing a thickness of a contour line, changing a type of the contour line (examples of the type of line include a solid line, a broken line, and a one-dot chain line), or a combination of those. Instead of displaying the contour of the cell, it is conceivable to indicate the cell region by an arrow, color the cell region, or show a long diameter and a short diameter of the cell region. It is also conceivable to allow the determination result to be grasped by changing a intensity of the contour, the coloring, or the arrow. Further, as the heat map image, a heat map image with the width direction indicating the time, the height direction indicating the region tracking number, and the numerical value of each pixel representing the binary value or the likelihood may be displayed. In a case of such a trained model that determines the state of the "live cell," the "dead cell," or the "non-cell" as described as an example, it is also suitable to calculate a live cell rate ((number of live cells)/((number of live cells)+(number of dead cells))) or the like at each timing and display a temporal transition of the live cell rate.

As described above, according to this embodiment, it is possible to present, to a user, the determination results about the state of the cell through use of a trained model based on more reliable labeled data.

(First Modification Example of First Embodiment: Position Alignment)

In the first embodiment, the example in which the cell images I00 to I51 are images photographed with the same field of view has been described. Instead of using the images photographed with the field of view including completely the same cell regions, when images photographed with fields of view including some cell regions in common are used or when a photographing position is expected to be moved due to vibration of the apparatus or the like, it is desired to carry out position alignment between a plurality of images in the time-series cell image group. The position alignment may be performed in a step such as Step S101, Step S102, or Step S103, or can be performed in a separate step. The position alignment is only required to be carried out between images between successive timings, and a publicly known position alignment technology such as template matching can be used. Not only the template matching but also a position alignment method, such as SIFT or SURF, in which feature points are extracted and an affine transformation matrix is estimated based on feature point matching may be used. Further, instead of using the phase contrast images to carry out the position alignment, the position alignment may also be carried out through use of such mask images as illustrated in FIG. 3.

According to this modification example, even when there occurs a misalignment in the field of view between the cell images at different timings in the time-series cell image group, it is possible to generate a trained model and to acquire the information about the state of the cell through use of the trained model.

(Second Modification Example of First Embodiment: Case of Sample in which Live Cells and Dead Cells have been stained with Different Dyes)

In the first embodiment, in the example of the trained model generation method of from Step S601 to Step S608, the example in which the fluorescent images of the cell sample in which live cells and dead cells were stained with fluorescent dyes of the same color at different timings are acquired has been described. The present disclosure is not limited thereto, and fluorescent images of a cell sample in which live cells and dead cells were stained with fluorescent dyes of different colors, namely, fluorescent dyes different in at least any one of excitation wavelength and fluorescence wavelength, may be used for trained model generation.

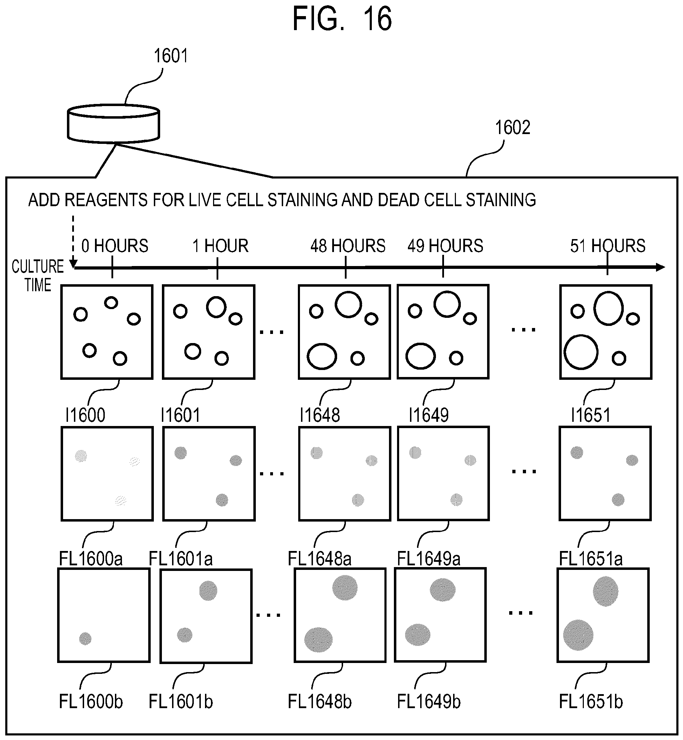

In that case, in the example of FIG. 7, fluorescent images respectively corresponding to each of live cells and dead cells may be acquired at each timing. The fluorescent images are two types of grayscale images respectively corresponding to live cells and dead cells. When the fluorescent image is an RGB color image, color components corresponding to the fluorescent dyes staining the cell sample may be extracted. For example, when the cell sample is stained with a red dye for live cells and a green dye for dead cells, images of R and G components are extracted from the RGB color image. FIG. 16 is a diagram for illustrating an example (image 1602) of acquiring phase contrast images in a cell sample in which live cells and dead cells were stained with fluorescent dyes of different colors, fluorescent images corresponding to the dead cell staining, and fluorescent images corresponding to the live cell staining. Fluorescent images FL1600a to FL1651a corresponding to the dead cell staining and fluorescent images FL1600b to FL1651b corresponding to the live cell staining both of which correspond to phase contrast images I1600 to I1651 at the respective timings have been acquired.

When fluorescent images corresponding to live cell staining and dead cell staining in a culture vessel 1601 are acquired as illustrated in the image 1602 of FIG. 16, in Step S606, the average of the intensity value in each cell candidate region of each of the fluorescent images is calculated, and based on the respective fluorescence intensities, the fluorescence intensity feature value of each time-series cell candidate region group is calculated as shown in FIG. 11. The first embodiment has been described above by taking the example of calculating the "fluorescence intensity at the beginning of dead cell staining," the "fluorescence intensity at the end of dead cell staining," and the "maximum value of the amount of change in the fluorescence intensity due to dead cell staining" as the feature value expressing the temporal change in the fluorescence intensity due to the dead cell staining as shown in FIG. 11. Meanwhile, as in this modification example, when fluorescent images are acquired from the 0 hours of culture time in regard to the live cell staining as well, it is also preferred to calculate a feature value expressing the temporal change in the fluorescence intensity due to the live cell staining. Specifically, in the same manner as in the case of the dead cell staining, a "fluorescence intensity at the beginning of live cell staining," a "fluorescence intensity at the end of live cell staining," and a "minimum value of the amount of change in the fluorescence intensity due to live cell staining" may be calculated.

After that, in Step S607 and the subsequent processing steps, in the same manner as in the first embodiment, the labeling processing is carried out through use of the calculated fluorescence intensity feature value to generate a trained model.

As described above, according to this modification example, even in a case of acquiring fluorescent images of a cell sample in which live cells and dead cells were stained with fluorescent dyes of different colors, it is possible to generate a trained model and to acquire the information about the state of the cell through use of the trained model.

(Third Modification Example of First Embodiment: Case of Sample in which Cells and Dead Cells have been stained with Different Dyes)

In the first embodiment, in the example of the trained model generation method of from Step S601 to Step S608, the example in which the fluorescent images of the cell sample in which live cells and dead cells were stained with fluorescent dyes of the same color at different timings are acquired has been described. The present disclosure is not limited thereto, and in Step S601, fluorescent images of a cell sample in which cells and dead cells were stained with fluorescent dyes of different colors may be used. Examples of reagents for staining cells include a nuclear staining reagent and a cell membrane staining reagent.

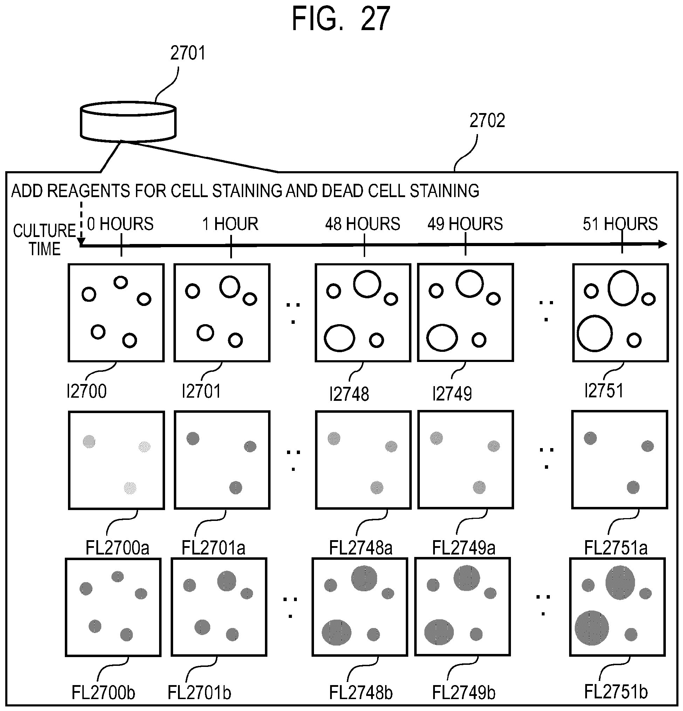

In that case, in the example of FIG. 7, fluorescent images respectively corresponding to each of cells and dead cells may be acquired at each timing. The fluorescent images are two types of grayscale images respectively corresponding to cells and dead cells. When the fluorescent image is an RGB color image, color components corresponding to the fluorescent dyes staining the cell sample may be extracted. For example, when the cell sample is stained with a red dye for cells and a green dye for dead cells, images of R and G components are extracted from the RGB color image. FIG. 27 is a diagram for illustrating an example of acquiring phase contrast images in a cell sample in which live cells and dead cells were stained with fluorescent dyes of different colors, fluorescent images corresponding to the dead cell staining, and fluorescent images corresponding to the live cell staining. Fluorescent images FL2700a to FL2751a corresponding to the dead cell staining and fluorescent images FL2700b to FL2751b corresponding to the cell staining both of which correspond to phase contrast images I2700 to I2751 at the respective timings have been acquired.

When fluorescent images corresponding to cell staining and dead cell staining in a culture vessel 2701 are acquired as illustrated in the image 2702 of FIG. 27, in Step S606, the average of the intensity value in each cell candidate region of each of the fluorescent images is calculated, and based on the respective fluorescence intensities, the fluorescence intensity feature value of each time-series cell candidate region group is calculated as shown in FIG. 11. Further, the "fluorescence intensity at the beginning of dead cell staining," the "fluorescence intensity at the end of dead cell staining," and the "maximum value of the amount of change in the fluorescence intensity due to dead cell staining" are calculated as the feature value expressing the temporal change in the fluorescence intensity due to the dead cell staining as shown in FIG. 11. In regard to the cell staining, the temporal change is not large, and hence the fluorescence intensity at a specific time point or the average value of time-series data of the fluorescence intensity may be taken.

After that, in Step S607 and the subsequent processing steps, in the same manner as in the first embodiment, the labeling processing is carried out through use of the calculated fluorescence intensity feature value to generate a trained model.

As described above, according to this modification example, even in a case of acquiring fluorescent images of a cell sample in which cells and dead cells were stained with fluorescent dyes of different colors, it is possible to generate a trained model and to acquire the information about the state of the cell through use of the trained model.

It is also suitable to use fluorescent images of a cell sample in which cells and dead cells were stained with fluorescent dyes of different colors, and the same method can be used to generate a trained model and to acquire the information about the state of the cell through use of the trained model.

(Fourth Modification Example of First Embodiment: Carrying out Unsupervised Clustering Stepwise)

In the first embodiment, the method for the labeling processing in which the fluorescence intensity feature value data group of the respective time-series cell candidate region groups is divided into four types of clusters by the unsupervised clustering, and each of the clusters is labeled on a rule basis has been described. The present disclosure is not limited thereto, and the labeling processing may be carried out stepwise in Step S607. The stepwise labeling processing is effective when the fluorescence intensity feature value that is particularly effective for classification using the unsupervised clustering and a degree of difficulty of classification are easy to predict. Specifically, in an example of assigning the four types of labels "live cell," "non-cell," "dead cell," and "cell changed in the live or dead state," it can be expected that classification between "live cells" and "non-cells" is difficult and classification between "dead cells" or "cells changed in the live or dead state" and others is relatively easy based on, for example, states of the temporal transitions of the fluorescence intensities as shown in FIG. 9.

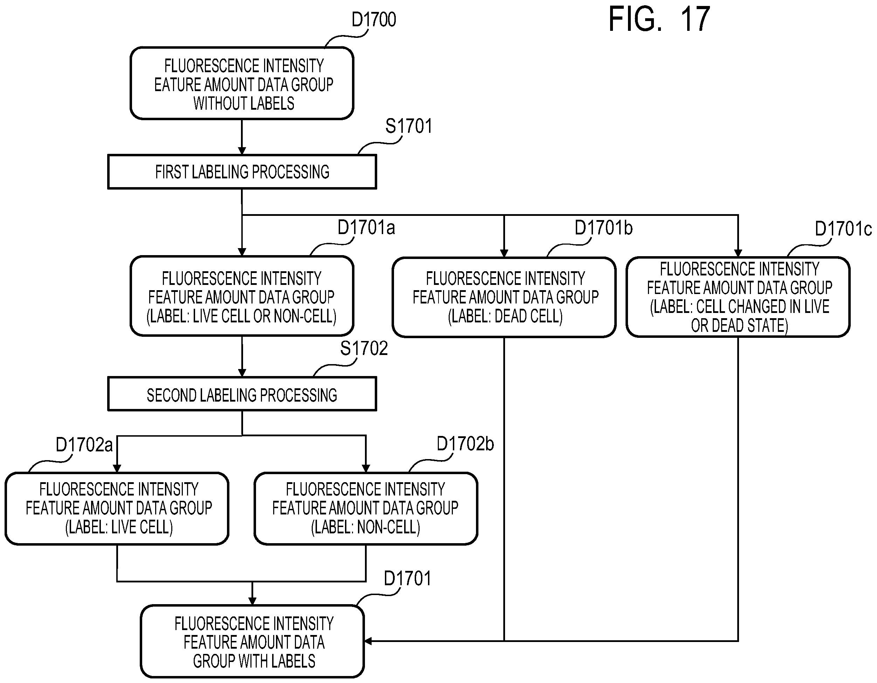

FIG. 17 is a diagram for illustrating a data flow obtained when the labeling processing is applied stepwise to the fluorescence intensity feature value data group. In the same manner as in the first embodiment, an example in which the four types of labels "live cell," "non-cell," "dead cell," and "cell changed in the live or dead state" are assigned to the time-series cell candidate region groups is illustrated.

First, a fluorescence intensity feature value data group D1700 obtained before the labeling processing is performed, and corresponds to a data group such as the table of FIG. 10.

Step S1701 is a first labeling processing step of dividing the fluorescence intensity feature value data group D1700 into three types of data groups: "live cells or non-cells," "dead cells," and "cells changed in the live or dead state." In the first labeling processing step, an unsupervised clustering method with the number of clusters being set to three is applied, and then each cluster is labeled on a rule basis. In this case, in the unsupervised clustering in the first labeling processing step, it can be easily expected that three types of feature values of the "fluorescence intensity at the beginning of dead cell staining," the "fluorescence intensity at the end of dead cell staining," and the "maximum value of the amount of change in the fluorescence intensity due to dead cell staining" among the fluorescence intensity feature values shown in FIG. 10 greatly contribute to the classification. Thus, it is also suitable to carry out the unsupervised clustering through use of only those three types of feature values. The labeling on a rule basis may be carried out in the same manner as the method of assigning the labels "dead cell" and "cell changed in the live or dead state" described in the first embodiment, and label the remaining one cluster "live cells or non-cells." Through the above-mentioned first labeling processing step, the fluorescence intensity feature value data group D1700 is divided into three types of data groups D1701a, D1701b, and D1701c, namely, "live cells or non-cells," "dead cells," and "cells changed in the live or dead state."

Step S1702 is a second labeling processing step of dividing the data group D1701a to which the label "live cell or non-cells" has been added, into two types of data groups of "live cells" and "non-cells." In the second labeling processing step, an unsupervised clustering method with the number of clusters being set to two is applied, and then each cluster is labeled on a rule basis. In this case, in the unsupervised clustering in the second labeling processing step, it can be easily expected that the feature value of the "maximum value of the fluorescence intensity due to live cell staining" among the fluorescence intensity feature values shown in FIG. 10 greatly contributes to the classification. Thus, it is also suitable to carry out the unsupervised clustering through use of only this one type of feature value. The labeling on a rule basis may be carried out in the same manner as the method of assigning the label "live cell" described in the first embodiment, and label the remaining one cluster "non-cells." Through the above-mentioned second labeling processing step, the fluorescence intensity feature value data group D1701a is divided into two types of data groups D1702a and D1702b, namely, "live cells" and "non-cells."

Finally, the data groups D1701b, D1701c, D1702a, and D1702b with determined labels are combined as a fluorescence intensity feature value data group D1701 with labels, and it is possible to acquire a data group to which ground truth labels have been assigned can be obtained as in FIG. 11 and FIG. 12 in the first embodiment.

The processing steps of Step S608 and the subsequent processing steps are the same as those of the first embodiment.

As described above, according to this modification example, when the fluorescence intensity feature value that is particularly effective for the classification using the unsupervised clustering and the degree of difficulty of classification are easy to predict, it is possible to generate a trained model using training data having a higher degree of reliability of the ground truth labels.

(Fifth Modification Example of First Embodiment: Data Cleansing of "Cells changed in Live or Dead State")

In Step S608 in the first embodiment, the example of performing the training by excluding data to which the label "cell changed in the live or dead state" has been assigned from the training data in the process of generating a trained model that classifies "live cells," "dead cells," and "non-cells" has been described.

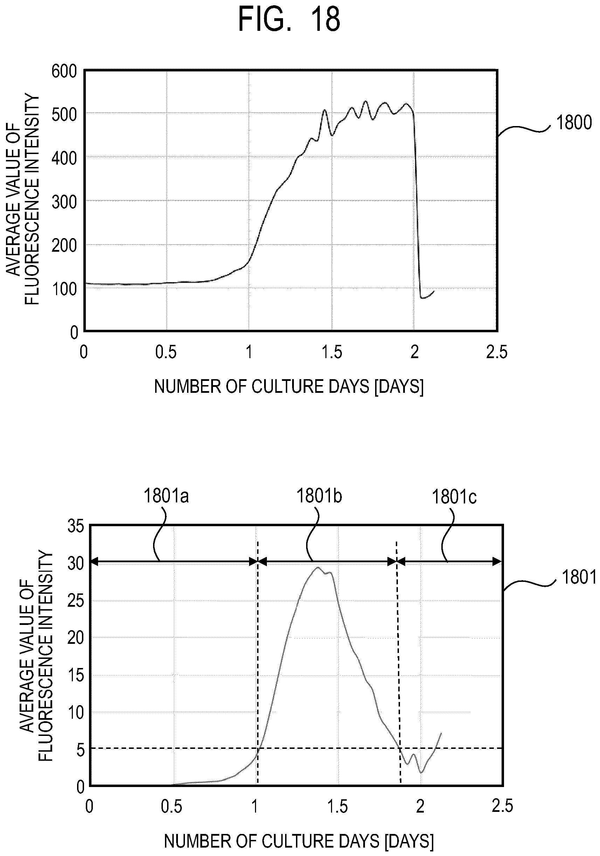

The present disclosure is not limited thereto, and at the time of the trained model generation, the labels of some cell candidate regions in the data to which the label "cell changed in the live or dead state" has been assigned may be changed to the label "live cell" or "dead cell" and used as the training data. Specifically, the amount of change in the fluorescence intensity in each of the time-series cell candidate region groups to which the label "cell changed in the live or dead state" has been assigned is used to determine each of a culture time slot in which the cell is in the state of the live cell, a culture time slot in which the state is transitioning from the live cell to the dead cell, and a culture time slot in which the cell is in the state of the dead cell. FIG. 18 is an example of showing the temporal transition of the fluorescence intensity and the temporal transition of the amount of change in the fluorescence intensity of the time-series cell candidate region group to which the label "cell changed in the live or dead state" has been assigned. A graph 1800 shows the temporal transition of the fluorescence intensity, and a graph 1801 shows the temporal transition of the amount of change in the fluorescence intensity. The temporal transition of the fluorescence intensity of the "cell changed in the live or dead state" involves a significant increase in intensity from a low intensity state when the state transitions from the live cell to the dead cell. Thus, in the temporal transition of the amount of change in the fluorescence luminance, a timing at which the amount of change reaches a maximum value may be set as a reference timing at which the state transitions at least from the live cell to the dead cell to determine a time slot before the reference timing in which the amount of change is equal to or smaller than a threshold to be a time slot in the state of the "live cell" and a time slot after the reference timing in which the amount of change is equal to or smaller than the threshold to be a time slot in the state of the "dead cell." The threshold is set to, for example, "5". In the example of FIG. 18, a time slot 1801a is the time slot in the state of the "live cell," and a time slot 1801c is the time slot in the state of the "dead cell." The label for data of each of the cell candidate regions corresponding to the time slots is replaced by the label "live cell" or "dead cell." Instead of setting a threshold, a full width at half maximum with respect to the reference position may be used to determine the time slots.

According to this modification example, it is possible to generate a trained model using training data having an increased amount of training data relating to "live cells" and "dead cells."

(Sixth Modification Example of First Embodiment: Data Cleansing of "Non-cells")

In the first embodiment, the labeling processing for assigning the labels "live cell," "non-cell," "dead cell," and "cell changed in the live or dead state" has been described. In this modification example, a data cleansing method of excluding data in an even more ambiguous state from the results of the labeling processing is described.

As a specific example, a method of data cleansing for data corresponding to the label "non-cell" in the first embodiment is described below.

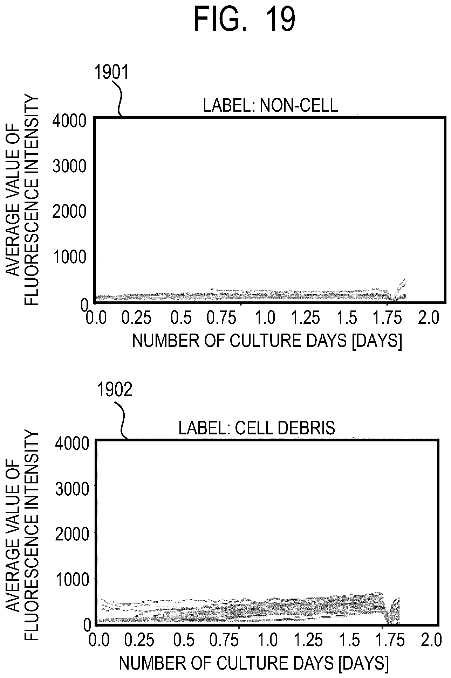

As described above, it is assumed that "non-cells" are objects such as cell debris and a scratch or an adhering substance on the culture vessel in addition to the cell region, and ground truth labels also including "cell debris" and "scratches or adhering substances" that are distinguished therebetween are desired to be assigned to labeled data for a machine learning model. For example, the "cell debris" is expected to take more diverse forms than "scratches or adhering substances," and hence uniformly training as "non-cells" may lead to deterioration of performance of the machine learning model. Thus, such labeling processing for distinguishing "cell debris" and "scratches or adhering substances" from each other may be further carried out on data labeled "non-cell." Specifically, as described in the fourth modification example of the first embodiment, the unsupervised clustering using specific fluorescence luminance feature values and the labeling on a rule basis are performed. For example, the "fluorescence luminance at the end of dead cell staining" among such fluorescence luminance feature values as shown in FIG. 10 is used to carry out unsupervised clustering with the number of clusters being set to two. After that, the average values of "fluorescence luminance at the end of dead cell staining" in the respective clusters are compared to each other to assign the label "non-cell" to data belonging to the cluster having a smaller average value and the label "cell debris" to data belonging to the other cluster. FIG. 19 is a set of graphs for showing results of applying the data cleansing in this modification example to such a data group of the time-series cell candidate region groups to which the label "non-cells" has been assigned as shown in the graph 1304 of FIG. 13. A graph 1901 shows temporal transitions of the fluorescence intensities of the time-series cell candidate region groups to which the label "non-cells" has been assigned, and a graph 1902 shows temporal transitions of the fluorescence intensities of the time-series cell candidate region groups to which the label "cell debris" has been assigned.

In the trained model generation step of Step S608, the training of the machine learning model is carried out through use of training data excluding the data to which the label "cell debris" has been assigned.

This modification example can be carried out in combination with the labeling processing in each of the first embodiment and other modification examples as post-processing therefor. Whether or not to carry out data cleansing in this modification example may be determined by being instructed by the user after such graphs of the temporal transitions of the fluorescence intensities subjected to the labeling processing as shown in FIG. 13 or the like is displayed on the display.

(Seventh Modification Example of First Embodiment: Analysis of Information Indicating whether or not Cell Candidate Region is Differentiated Region)

It is also suitable to analyze, as a state regarding the cell candidate region, information indicating whether or not the cell candidate region is a differentiated region through Step S106. That is, in this modification example, a binary value or the like indicating whether or not the cell candidate region is a differentiated region is acquired in Step S106 through use of the feature values calculated in Step S105 and Step S104.

It is known that in culture of cells having differentiation potency, such as embryonic stem cells (ES cells), induced pluripotent stem cells (iPS cells), and somatic stem cells, there is a case in which cells in a further differentiated state are generated when culture conditions are not appropriate. The differentiated region refers to a region exhibiting such a further differentiated state.

In generating a learning model for analyzing information indicating whether or not the cell candidate region is a differentiated region, a time-series fluorescent image group obtained by fluorescently staining an undifferentiated marker or a differentiated marker is acquired. As a fluorescent staining reagent of the undifferentiated marker, a fluorescent staining reagent of rBC2LCN or various pluripotent stem cell markers is used in a case of ES cells or iPS cells, and in a case of somatic stem cells, a fluorescent staining reagent of a somatic stem cell marker corresponding thereto is used.

As the differentiation marker, a three germ layer marker may be selected in the case of ES cells or iPS cells, and in the case of somatic stem cells, a marker corresponding to a further differentiated cell may be selected with reference to a differentiation lineage diagram.

The other steps are the same as those described in the first embodiment, and hence description thereof is omitted. According to this modification example, it is possible to analyze the binary value or the like indicating whether or not the cell candidate region is a differentiated region as the information about the state of the cell.

(Eighth Modification Example of First Embodiment: Carrying out Unsupervised Clustering using Time-series Data as Input)

In the first embodiment, the method of carrying out the unsupervised clustering based on the fluorescence luminance feature value data of the respective time-series cell candidate region groups calculated as shown in FIG. 11 has been described. The present disclosure is not limited thereto, and such an unsupervised clustering method as to use time-series data as input to divide the time-series data into a freely-set number of clusters may be used. For example, a method such as TimeSeriesKMeans may be used. When a method that uses time-series data as input, such as TimeSeriesKMeans, is used, such time-series data groups of the fluorescence intensities in the respective time-series cell candidate region groups as shown in FIG. 8 are used as subject data for unsupervised clustering.

This modification example is effective when it is difficult to predict the feature value particularly useful for the unsupervised clustering, for example, such a fluorescence luminance at a specific timing or a statistical value of the amount of change in the fluorescence luminance as shown in FIG. 10.

(Reference Example: Evaluation of Trained Model)

In the first embodiment, the example of training the trained model has been described, and evaluation of the trained model may be performed by preparing a data group for the evaluation which is different from data that is used for training. In this case, as the data group for the evaluation, a data group extracted by cutting out a part of a data group that is used for the training may be used. For example, data is extracted randomly so that a ratio of the number of pieces of data for the training to the number of pieces of data for the evaluation is 8:2. When the data group that is subjected to use for the training and the evaluation of the trained model is a data group acquired with respect to a plurality of different culture vessels, the data group may be divided into a data group for the training and a data group for the evaluation on a culture vessel basis instead of being randomly extracted from the entire data group.

In this reference example, an example of the evaluation of a trained model to be performed when a live cell determination model that determines whether or not the cell candidate region is a live cell is generated as the trained model is described. As the live cell determination model, an anomaly detection-based machine learning model that performs the two-class classification into the state of the "live cell" and the "other" state as described in the first embodiment may be trained.

The evaluation can be carried out by comparing the ground truth labels assigned to the data group for the evaluation by the processing based on Step S601 to Step S607 to the information about the state of the cell in the cell candidate region which has been acquired based on Step S101 to Step S106. More specifically, it suffices to calculate indices such as sensitivity (recall), specificity, and F1-Score which are evaluation indices commonly used in anomaly detection.

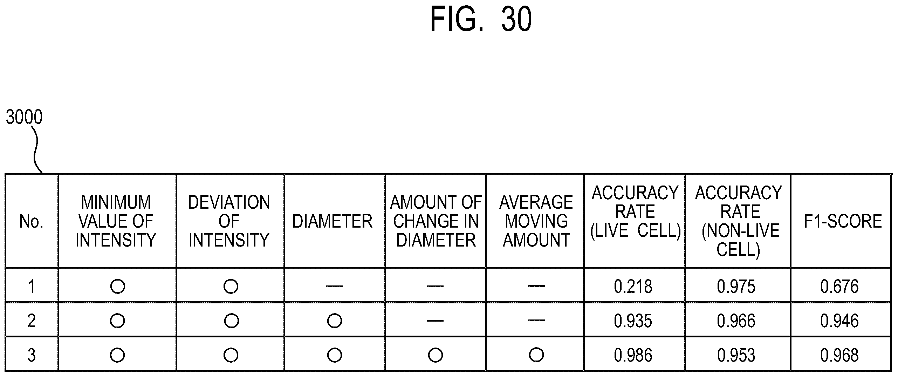

FIG. 30 is a table for showing an example of results of evaluation of a live cell determination model. In the first embodiment, the example in which such a feature value vector formed of the diameter, the average value of the luminance, the minimum value of the luminance, the deviation of the luminance, the average moving amount, and the amount of change in the diameter of each cell candidate region in the cell image as shown in FIG. 15 is used as the input data to the trained model has been described. In the example of FIG. 30, accuracies of three types of live cell determination models No. 1, No. 2, and No. 3 obtained by changing types and a combination of feature values forming the input data are compared to each other. In FIG. 30, the circular symbols indicate which feature values are included in each live cell determination model as the feature values forming the input feature value vector.

The accuracy rate (live cell) and the accuracy rate (non-live cell) have the same meanings as those of specificity and sensitivity (recall), respectively, which are commonly used as evaluation indices for anomaly detection models. Further, the F1-Score is a harmonic mean of precision and sensitivity (recall), and is commonly used as an evaluation index for anomaly detection models in the same manner as the sensitivity (recall) and the specificity.

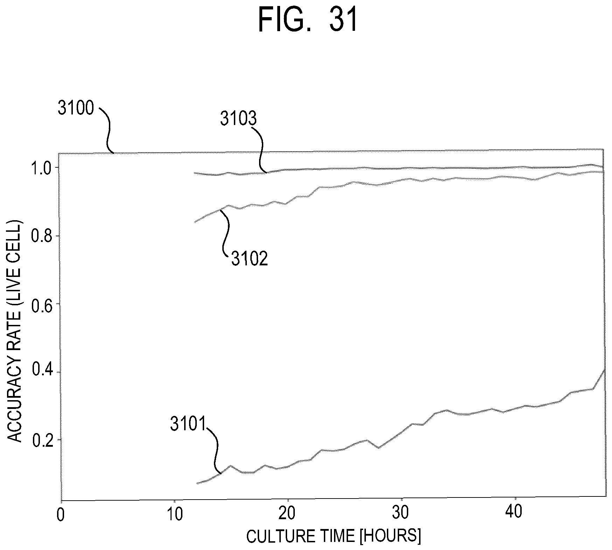

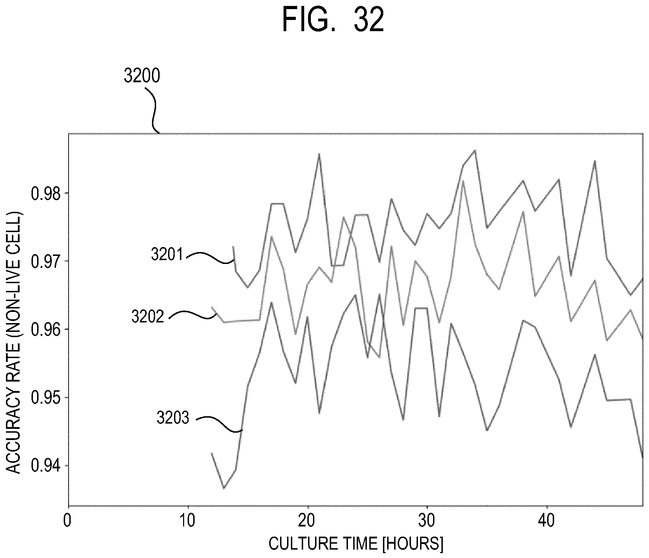

FIG. 31 is a graph for showing results of evaluating the accuracy rate (live cell) for each hour of culture time. In a graph 3100, graphs 3101, 3102, and 3103 correspond to the models No. 1, No. 2, and No. 3 in a table 3000 of FIG. 30, respectively. Meanwhile, FIG. 32 is a graph for showing results of evaluating the accuracy rate (non-live cell) for each hour of culture time. In a graph 3200, graphs 3201, 3202, and 3203 correspond to the models No. 1, No. 2, and No. 3 in the table 3000 of FIG. 30, respectively.

The cell image analysis method according to the first embodiment may further include a display control step of displaying the results of the evaluation in this reference example. In that case, it is preferred to display the information about the data group used for the training and the evaluation of the trained model and such numerical values or a graph for showing evaluation results as shown in FIG. 30, FIG. 31, or FIG. 32. The information about the data group is, for example, information indicating culture conditions such as the number of culture days and a seeding density of the cell sample, information indicating photographing conditions such as an image pickup field of view and an exposure time, and information indicating the number of pieces of data such as a total number of pieces of data and the number of pieces of data for each ground truth label.

(Second Reference Example: Evaluation of Trained Model)

In the above-mentioned reference example, the example of comparing the evaluation results of three types of live cell determination models obtained by training the anomaly detection-based machine learning model by changing the types and the combination of feature values forming the input data to each other has been described.

In this reference example, as another suitable example, an example of comparing the evaluation results of four types of live cell determination models obtained by training a machine learning model using a decision tree based on a CART algorithm by changing the types and the combination of feature values forming the input data to each other is described. As the evaluation indices for the evaluation of a trained machine learning model, the accuracy rate (live cell), the accuracy rate (non-live cell), and the F1-Score were calculated in the same manner as in FIG. 30.

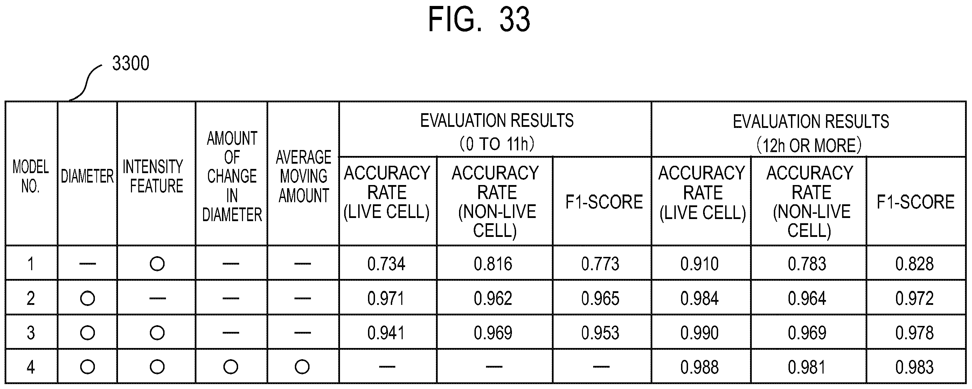

FIG. 33 is a table for showing an example of results of evaluating the accuracy of a live cell determination model. Accuracies of four types of live cell determination models No. 1, No. 2, No. 3, and No. 4 obtained by changing types and a combination of feature values forming the input data are compared to each other. Similarly to FIG. 30, the circular symbols indicate which feature values are included in each live cell determination model as the feature values forming the input feature value vector. In this case, the luminance feature is a term collectively referring to the average value of the luminance, the minimum value of the luminance, and the deviation of the luminance among the pieces of data shown in FIG. 15.

FIG. 33 is a table for showing results of dividing the data group for the evaluation into two data groups, one for the culture time being 0 hours to 11 hours and the other for the culture time being 12 hours or more, and then calculating the evaluation indices for each data group for each culture time slot. In this manner, evaluation values for the separate culture time slots may be calculated and displayed.

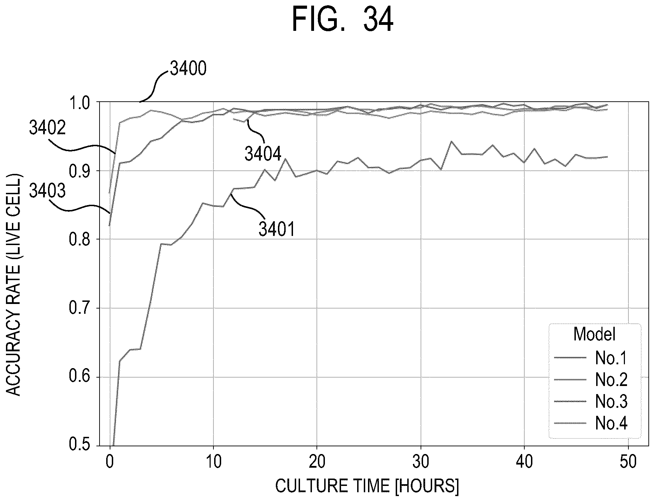

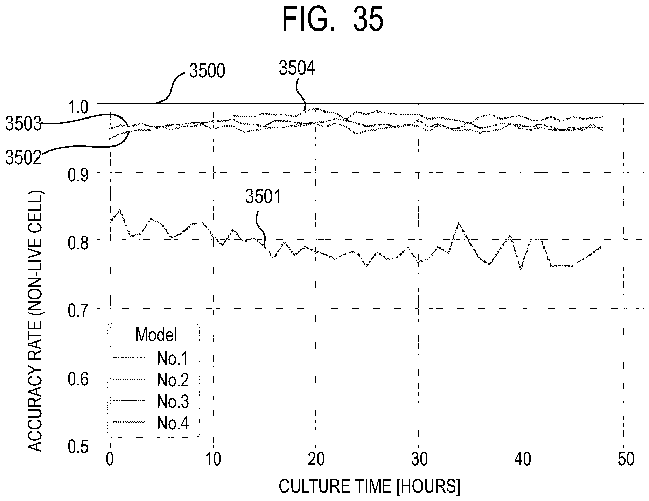

FIG. 34 is a graph for showing results of evaluating the accuracy rate (live cell) for each hour of culture time. In a graph 3400, graphs 3401, 3402, 3403, and 3404 correspond to the models No. 1, No. 2, No. 3, and No. 4 in a table 3300 shown in FIG. 33, respectively. Meanwhile, FIG. 35 is a graph for showing results of evaluating the accuracy rate (non-live cell) for each hour of culture time. In a graph 3500 shown in FIG. 35, graphs 3501, 3502, 3503, and 3504 correspond to the models No. 1, No. 2, No. 3, and No. 4 in the table 3300 shown in FIG. 33, respectively.

As described above, according to this reference example, the user can grasp performance of the trained model.

FIG. 30 to FIG. 35 used for describing the reference examples show the evaluation results of different models for time slots or at predetermined times. In the analysis step in the first embodiment, the trained model may be switched over depending on the time based on those evaluation results. For example, the trained model having the highest F1-Score is selected for each time slot. In the example of FIG. 33, the model No. 2 is applied to the data group for the culture time being 0 hours to 11 hours, and the model No. 4 is applied to the data group for the culture time being 12 hours or more. Further, a configuration in which the user refers to the evaluation results such as those of FIG. 30 to FIG. 35 and determines in advance which model is to be applied for which time slot may be used.

[Second Embodiment]

(Overview)

In the first embodiment, the method of acquiring the information about the state of the cell by using, as input to the trained model, the feature value vectors formed of the luminance feature values and the morphological feature values calculated from the time-series phase contrast image group obtained through observation in a time series or formed of the feature values relating to the temporal changes in the luminance feature value and the morphological feature value has been described.

In a second embodiment, a method of acquiring the information about the state of the cell by using, as input to the trained model, time-series data of the luminance feature value and the morphological feature value calculated from the time-series phase contrast image group obtained through observation in a time series, the time-series data being time-dependent information, is described.

(Processing Procedure)

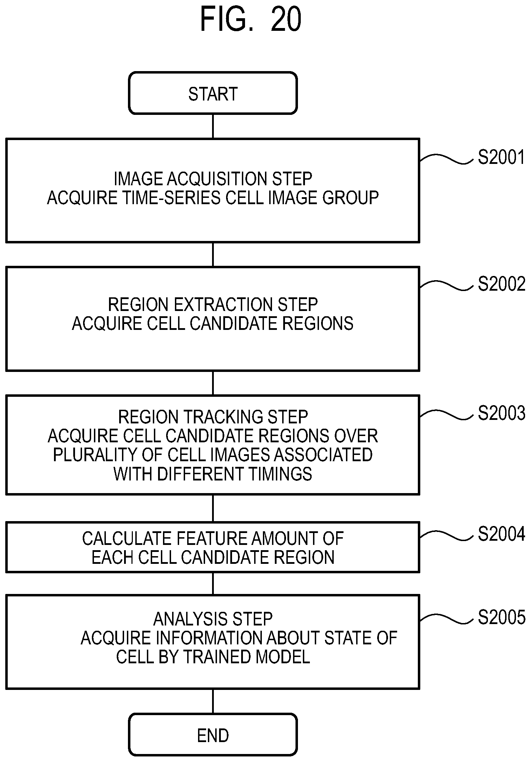

FIG. 20 is a flow chart of the cell information acquisition method according to the second embodiment.

Step S2001 to Step S2004 are the same as Step S101 to Step S104 in the first embodiment, and hence description thereof is omitted. Through Step S2001 to Step S2004, the time-series data of the luminance feature value and the morphological feature value in each time-series cell candidate region group is acquired, and this information is output to a module (e.g., analysis module 2804) for executing Step S2005.

(Step S2005: Analysis Step)

Step S2005 is a step of acquiring the information about the state of the cell in the cell candidate region through use of the time-series data of the luminance feature value and the morphological feature value calculated in Step S2001 to Step S2004.

In the present step, a trained model that has been trained in advance so as to use, as input, the time-series data of the feature values such as the luminance feature values and the morphological feature values calculated in Step S2004 to output the information about the state of the cell in the cell candidate region is used. The information about the state of the cell in the cell candidate region is, for example, as in the first embodiment, binary values indicating whether the cell candidate region is in a state of the live cell, the dead cell, or the non-cell.

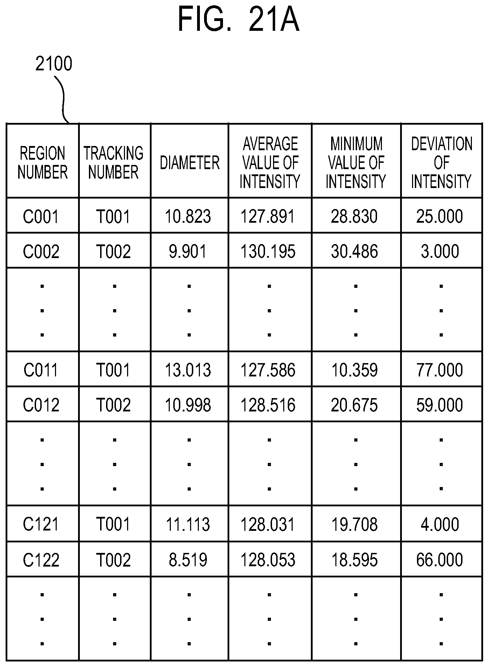

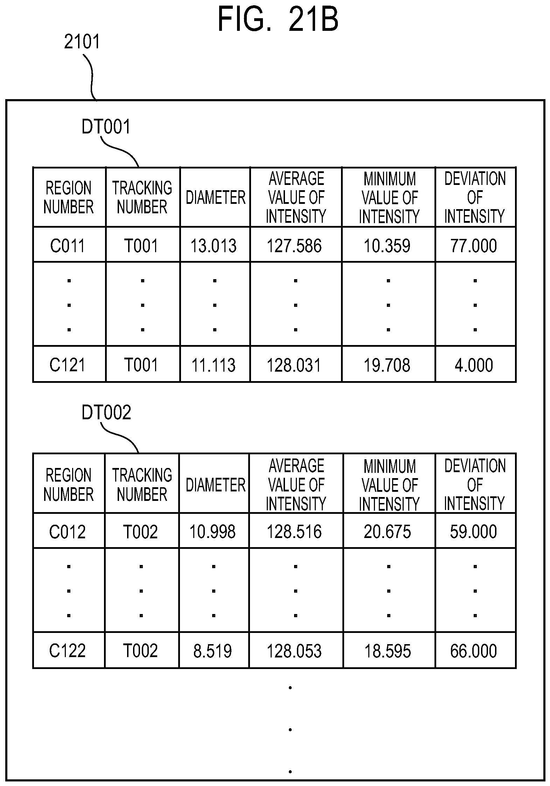

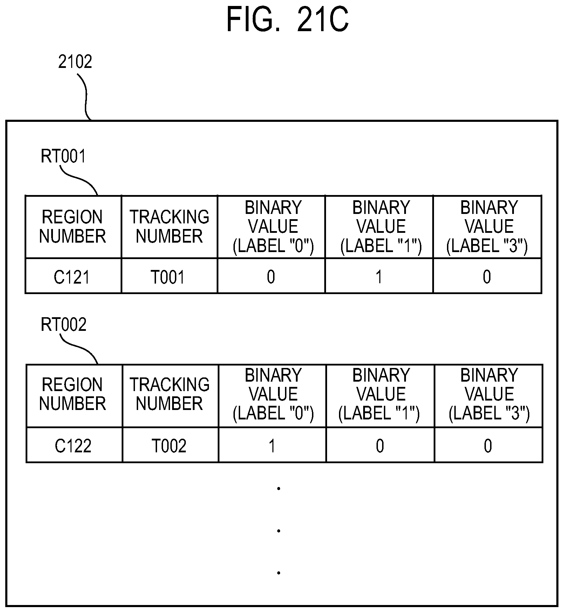

In the machine learning model in this embodiment, time-series feature value data obtained by extracting time-series data of the feature values for a past fixed time slot prior to any timing is used as input data. For example, time-series feature value data for a time slot of the past 12 hours is used as input. As a specific example, results of extracting the time-series feature value data that is used as input to the machine learning model at a timing of 12 hours of culture time are shown in FIG. 21A to FIG. 21C. A table 2100 shown in FIG. 21A is a feature value data group acquired in Step S2004. A table 2101 shown in FIG. 21B is results of extracting the time-series feature value data at the timing of 12 hours of culture time from the feature value data group of the table 2100 of FIG. 21A. The feature value data for the corresponding time slot in each time-series cell candidate region group having the same tracking number, such as time-series feature value data DT001 or DT002, is extracted. In this embodiment, pieces of data such as the time-series feature value data DT001 and DT002 shown in FIG. 21B are input to the trained model to acquire such results RT001 (corresponding to DT001) and RT002 (corresponding to DT002) of the binary values indicating whether the cell candidate region is in the state of the live cell, the dead cell, or the non-cell as shown in a table 2102 of FIG. 21C, respectively.

A specific trained model generation method is described below.

The trained model is, as in the first embodiment, a machine learning model that has been trained through use of, as teaching data, results of labeling processing based on information about a fluorescence luminance including at least information about a temporal change in the fluorescence luminance.

(Processing Procedure for Generating Trained Model)

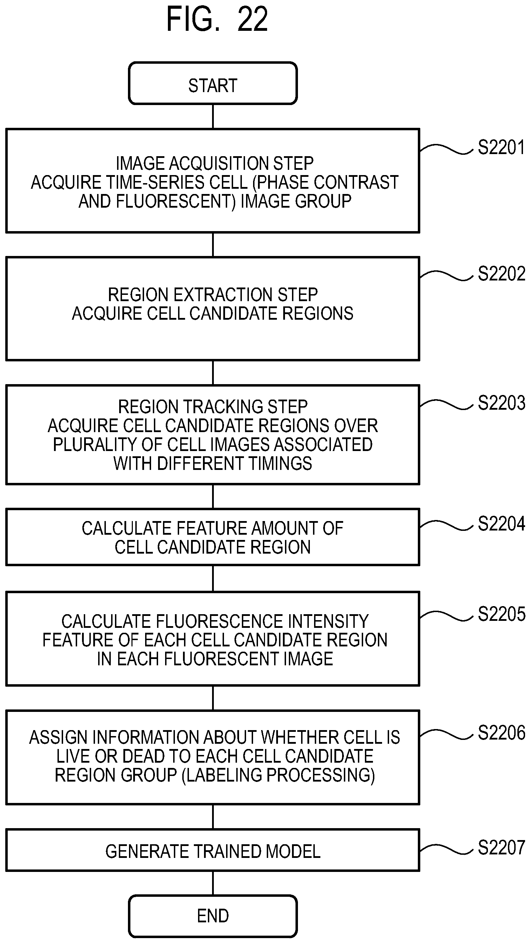

FIG. 22 is a flow chart for illustrating a flow of generating a trained model through the analysis step in the second embodiment.

Step S2201 to Step S2204 are the same as Step S601 to Step S604 in the first embodiment, and hence description thereof is omitted. Through Step S2201 to Step S2204, the time-series data of the luminance feature value and the morphological feature value in each time-series cell candidate region group is acquired, and the acquired time-series data is output to a module for executing Step S2205.

Step S2205 and Step S2206 are the same processing as Step S606 and Step S607 in the first embodiment, and hence description thereof is omitted. Through Step S2205 and Step S2206, data in which the ground truth label relating to the state of the cell in the cell candidate region is assigned to the time-series data of the luminance feature value and the morphological feature value in each time-series cell candidate region group is output to a module for executing Step S2207.

(Step S2207: Generation of Trained Model)

Step S2207 is a trained model generation step of generating a trained model based on the feature value data group of each cell candidate region to which the information about the state of the cell which has been acquired in Step S2206 has been assigned.

In the present step, a trained model is generated by training a machine learning model that uses the time-series data of the feature values in the cell candidate region of the phase contrast images included in each time-series cell candidate region group as input and the labels assigned in Step S2206 as a teacher to output the binary values indicating whether the cell candidate region is in the state of the live cell, the dead cell, or the non-cell. The machine learning model may be any machine learning model that uses time series data of feature values as input to perform classification into a freely-set number of classes, and as an example thereof, a classification model using a neural network such as an RNN may be used. The present disclosure is not limited thereto, and it is also possible to use a neural network model such as an LSTM. It is also possible to train, by regarding the time series data of a plurality of types of feature values as two-dimensional array data, a neural network that performs image classification such as ResNet.

The method of generating a trained model through the analysis step in the second embodiment has been described above.

In Step S2005, such time-series feature value data as shown in FIG. 21B is input to the trained model generated in Step S2201 to Step S2207 to acquire the information about the state of the cell in the cell candidate region.

As described above, according to this embodiment, it is possible to present, to a user, the determination results about the state of the cell through use of a trained model based on more reliable labeled data.

[Third Embodiment]

(Overview)

In the first embodiment, the method of acquiring the information about the state of the cell by using, as input to the trained model, the feature value vectors formed of the luminance feature values and the morphological feature values calculated from the time-series phase contrast image group obtained through observation in a time series or formed of the feature values relating to the temporal changes in the luminance feature value and the morphological feature value has been described.

In a third embodiment, a method of acquiring the information about the state of the cell by using, as input to the trained model, partial cell images obtained by cutting out cell regions corresponding to cell candidate regions from the phase contrast images is described.

(Processing Procedure)

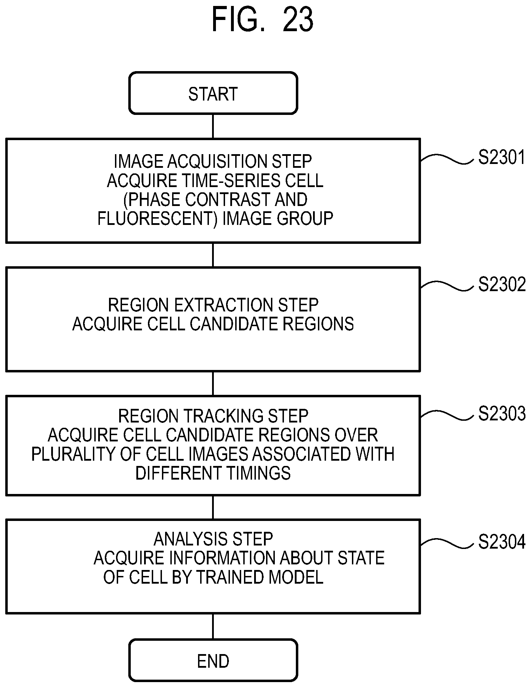

FIG. 23 is a flow chart of the cell information acquisition method according to the third embodiment.

Step S2301 to Step S2303 are the same as Step S101 to Step S103 in the first embodiment, and hence description thereof is omitted. Through Step S2301 to Step S2303, for the cell candidate regions, the region tracking numbers each indicating which cell candidate regions are temporally consecutive and are the same cell candidate region are assigned to the mask images and the contour coordinate information corresponding to the individual cell regions, and this information is output to a module (e.g., analysis module 2804) for executing Step S2304.

(Step S2304: Analysis Step)

Step S2304 is an analysis step of acquiring the information about the state of the cell in the cell candidate region based on the region tracking number and the cell candidate region acquired in Step S2303.

In the present step, a trained model that has been trained in advance so as to use, as input, the partial cell images corresponding to each cell candidate region based on the region tracking number and the cell candidate region acquired in Step S2303 to output the information about the state of the cell in the cell candidate region is used. Here, the partial cell image is an image obtained by cutting out, from the cell image, a rectangular region of a predetermined size centered on the centroid position of the cell candidate region. The predetermined size may be any size that includes a target cell candidate region, and for example, a rectangular region of 64x64 pixels is cut out. Further, the information about the state of the cell in the cell candidate region is, as in the first embodiment, for example, binary values indicating whether the cell candidate region is in a state of the live cell, the dead cell, or the non-cell.

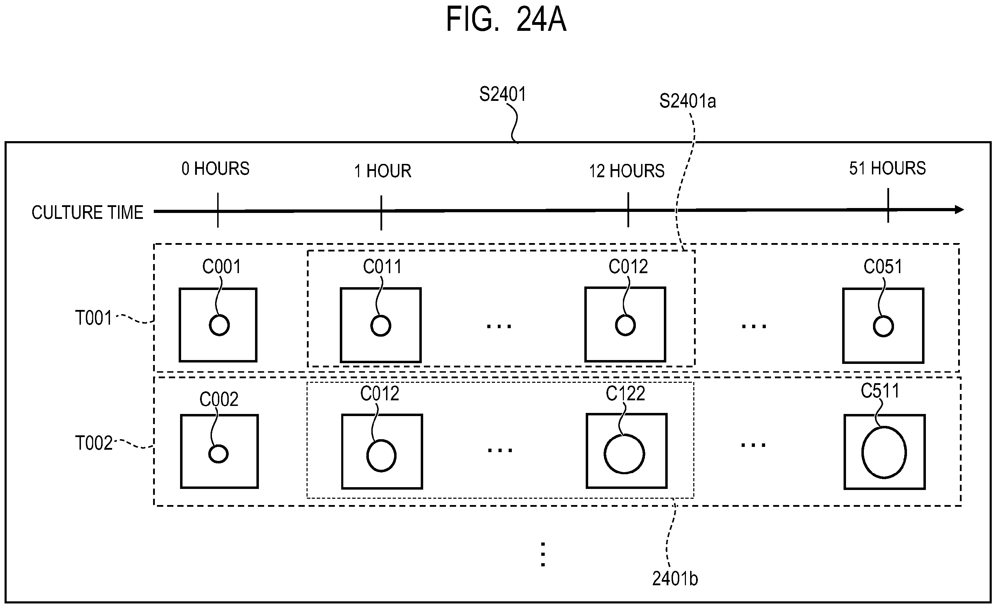

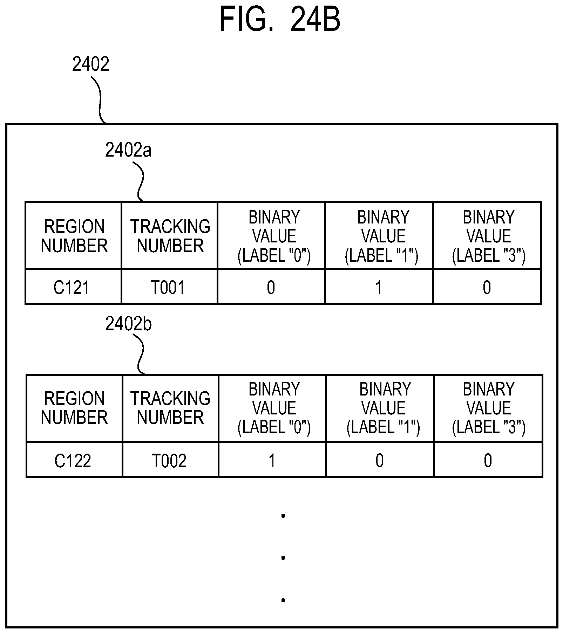

In the machine learning model in this embodiment, a partial cell image group obtained by extracting the partial cell images for a past fixed time slot prior to any timing is used as input data. For example, a partial cell image group for a time slot of the past 12 hours is used as input. As a specific example, results of extracting the partial cell image group that is used as input to the machine learning model at a timing of 12 hours of culture time are shown in FIG. 24A and FIG. 24B. An image 2401 of FIG. 24A is the partial cell image groups cut out from the respective cell images based on the region tracking numbers and the cell candidate regions acquired in Step S2303. For example, at the timing of 12 hours of culture time, the partial cell image groups such as partial cell image groups 2401a and 2401b are used as input to the machine learning model. The partial cell image groups such as the partial cell image groups 2401a and 2401b are input to the trained model to acquire, for each of the partial cell image groups, such results of the binary values indicating whether the cell candidate region is in the state of the live cell, the dead cell, or the non-cell as shown in a table 2402a (corresponding to 2401a) and a table 2402b (corresponding to 2401b) in a table 2402 of FIG. 24B.

A specific trained model generation method is described below.

The trained model is, as in the first embodiment, a machine learning model that has been trained through use of, as teaching data, results of labeling processing based on information about a fluorescence luminance including at least information about a temporal change in the fluorescence luminance.

(Processing Procedure for Generating Trained Model)

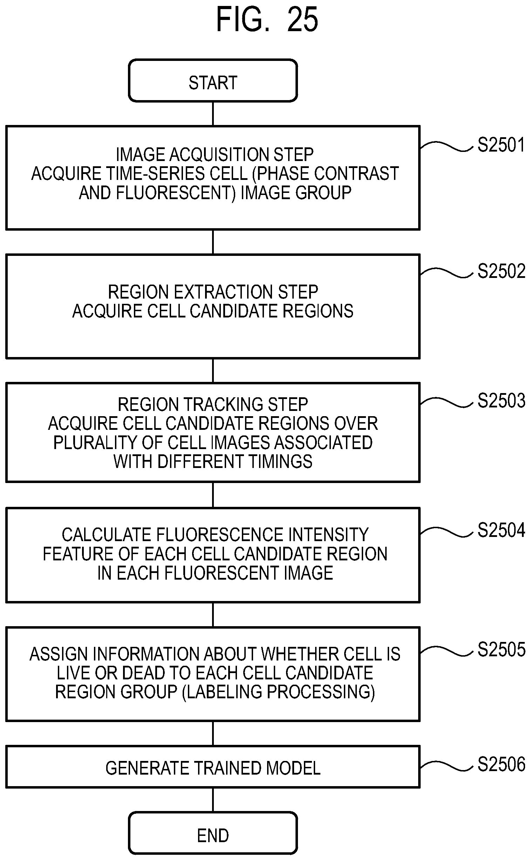

FIG. 25 is a flow chart for illustrating a flow of generating a trained model through the analysis step in the third embodiment.

Step S2501 to Step S2503 are the same as Step S601 to Step S603 in the first embodiment, and hence description thereof is omitted. Through Step S2501 to Step S2503, for the cell candidate regions, the region tracking numbers each indicating which cell candidate regions are temporally consecutive and are the same cell candidate region are assigned to the mask images and the contour coordinate information corresponding to the individual cell regions, and this information is output to a module for executing Step S2504.

Step S2504 and Step S2505 are the same processing as Step S606 and Step S607 in the first embodiment, and hence description thereof is omitted. Through Step S2404 and Step S2405, data in which the ground truth label relating to the state of the cell in the cell candidate region is assigned to each cell candidate region is output to a module (e.g., analysis module 2804) for executing Step S2506.

(Step S2506: Generation of Trained Model)

Step S2506 is a trained model generation step of generating a trained model based on each cell candidate region to which the information about the state of the cell which has been acquired in Step S2505 has been assigned.

In the present step, a trained model is generated by training a machine learning model that uses the partial cell image group obtained by extracting partial cell images for a past fixed time slot prior to any timing as input and the labels assigned in Step S2506 as a teacher to output the binary values indicating whether the cell candidate region is in the state of the live cell, the dead cell, or the non-cell. As the machine learning model, a neural network that uses time-series images as input, such as ConvLSTM, can be used. It is also possible to train, by regarding the partial cell image groups that are time-series image data as three-dimensional volume data, a neural network model that classifies the three-dimensional volume data, such as 3D-ResNet.

The method of generating a trained model through the analysis step in the third embodiment has been described above.

In Step S2304, such a partial cell image group as shown in FIG. 24A is input to the trained model generated in Step S2501 to Step S2506 to acquire the information about the state of the cell in the cell candidate region.

As described above, according to this embodiment, it is possible to present, to a user, the determination results about the state of the cell through use of a trained model based on more reliable labeled data.

<Cell Information Acquisition Program and Cell Information Acquisition System>

The present disclosure provides a program for causing a computer to execute the cell image analysis method according to the present disclosure described so far. Further, the present disclosure provides a medium having stored thereon the above-mentioned program in a computer-readable format.

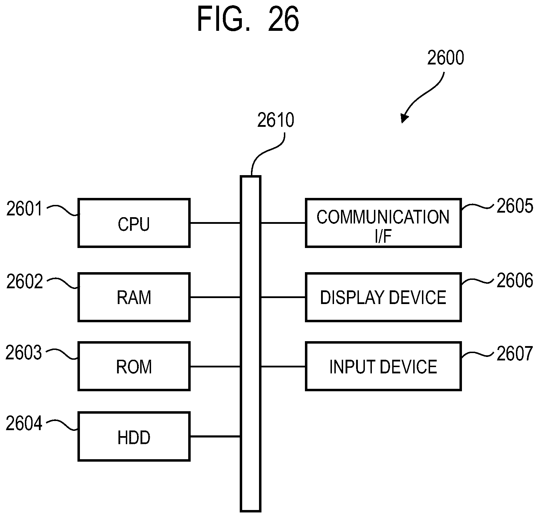

FIG. 26 is a block diagram for illustrating a hardware configuration example of an information processing device 2600 capable of executing the program according to the present disclosure.

The information processing device 2600 has functions of a computer. For example, the information processing device 2600 may be configured unitarily with a desktop personal computer (PC), a laptop PC, a tablet PC, or a smartphone, for example.

The information processing device 2600 includes, in order to implement functions as a computer which performs arithmetic operation and storage, a central processing unit (CPU) 2601, a random-access memory (RAM) 2602, a read-only memory (ROM) 2603, and a hard disk drive (HDD) 2604. The information processing device 2600 also includes a communication interface (I/F) 2605, a display device 2606, and an input device 2607. The CPU 2601, the RAM 2602, the ROM 2603, the HDD 2604, the communication I/F 2605, the display device 2606, and the input device 2607 are connected to each other via a bus 2610. The display device 2606 and the input device 2607 may be connected to the bus 2610 via a drive device (not shown) for driving those devices.

In FIG. 26, the various components forming the information processing device 2600 are illustrated as an integrated device, but some of the functions of those components may be implemented by an external device. For example, the display device 2606 and the input device 2607 may be external devices different from the components implementing the functions of the computer including the CPU 2601, for example.

The CPU 2601 performs predetermined operations in accordance with programs stored in, for example, the RAM 2602 and the HDD 2604, and also has a function of controlling each component of the information processing device 2600. The RAM 2602 is built from a volatile storage medium, and provides a temporary memory area required for the operations of the CPU 2601. The ROM 2603 is built from a non-volatile storage medium, and stores required information such as programs to be used for the operations of the information processing device 2600. The HDD 2604 is a storage device which is built from a non-volatile storage medium.

The communication I/F 2605 is a communication interface based on a standard such as Wi-Fi (trademark) or 4G, and is a module for communicating to and from another device. Examples of the display device 2606 include a liquid crystal display and an organic light emitting diode (OLED) display, and the display device 2606 is used for displaying moving images, still images, characters, and the like. Examples of the input device 2607 include a button, a touch panel, a keyboard, and a pointing device, and the input device 2607 is used by a user to operate the information processing device 2600. The display device 2606 and the input device 2607 may be integrally formed as a touch panel.

The hardware configuration illustrated in FIG. 26 is an example, and devices other than the illustrated devices may be added, or some of the illustrated devices may be omitted. Further, some of the devices may be substituted with another device having the same function. Moreover, some of the functions may be provided by another device via a network, and the functions for implementing the embodiments may be shared and implemented by a plurality of devices. For example, the HDD 2604 may be substituted with a solid state drive (SSD) which uses a semiconductor element such as a flash memory, or may be substituted with cloud storage.

<Cell Image Analysis Apparatus>

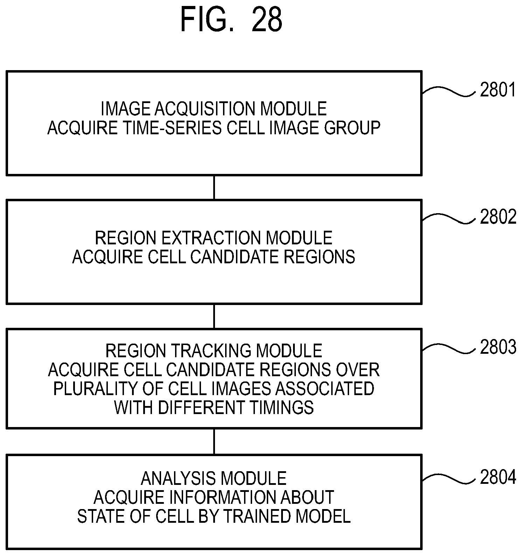

Further, as illustrated in FIG. 28, the present disclosure provides a cell image analysis apparatus including: an image acquisition module 2801 that acquires a time-series cell image group obtained by collecting a plurality of cell images obtained by photographing cells at a plurality of consecutive different timings by any one of a bright-field observation method or a phase contrast observation method, in association with the timings; the region extraction module 2802 that extracts cell candidate regions from the cell images included in the time-series cell image group; the region tracking module 2803 that determines whether the cell candidate regions over the plurality of cell images associated with mutually different timings which are included in the time-series cell image group correspond to the same target, collects the cell candidate regions determined to correspond to the same target in association with the timings, and acquires the determined cell candidate regions as a time-series cell candidate region group; and the analysis module 2804 that analyzes information about a state of a cell based on information about the time-series cell candidate region group. The analysis module uses a trained model, and the trained model is a machine learning model that has been trained, based on information about the time-series cell candidate region group and information about a state of a cell that had been acquired from cells for training, by using the information about the time-series cell candidate region group as input and the information about the state of the cell as output.

The image acquisition module 2801, the region extraction module 2802, the region tracking module 2803, and the analysis module 2804 execute the image acquisition step, the region extraction step, the region tracking step, and the analysis step described so far, respectively.

<Cell Image Analysis System>

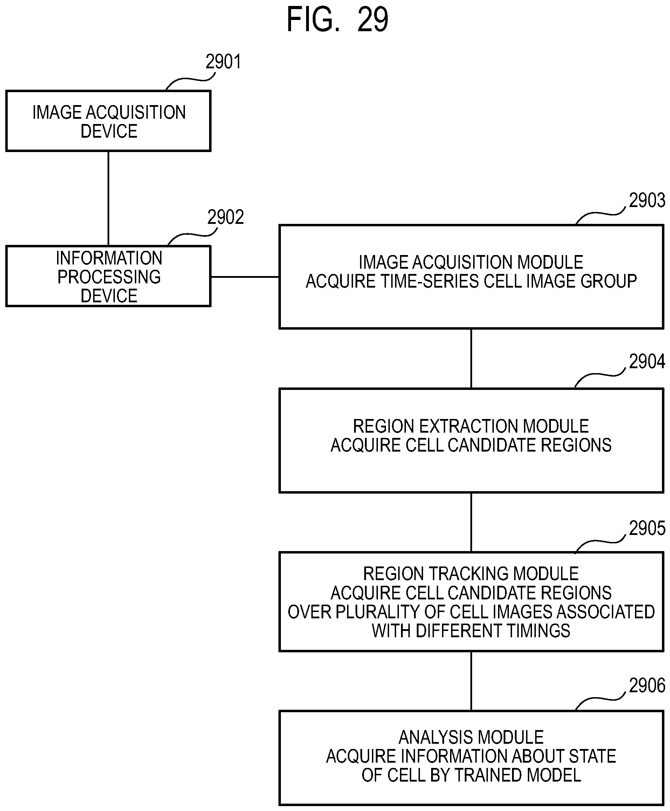

Further, as illustrated in FIG. 29, the present disclosure provides a cell image analysis system including an image acquisition device 2901 and an information processing device 2902.

The image acquisition device 2901 acquires cell images obtained by photographing cells at a plurality of consecutive different timings by any one of a bright-field observation method or a phase contrast observation method, the information processing device 2902 includes: an image acquisition module 2903 that acquires the cell images from the image acquisition device 2901, and acquires a time-series cell image group obtained by collecting the cell image in association with the timings; a region extraction module 2904 that extracts cell candidate regions from the cell images included in the time-series cell image group; a region tracking module 2905 that determines whether the cell candidate regions over a plurality of the cell images associated with mutually different timings which are included in the time-series cell image group correspond to the same target, collects the cell candidate regions determined to correspond to the same target in association with the timings, and acquires the determined cell candidate regions as a time-series cell candidate region group; and an analysis module 2906 that analyzes information about a state of a cell based on information about the time-series cell candidate region group, and the analysis module uses a trained model that uses, for cells for training, the information about the time-series cell candidate region group as input and the information about the state of the cell as output.

The image acquisition device 2901 can photograph cells at a plurality of consecutive different timings by any one of the bright-field observation method or the phase contrast observation method. The image acquisition device 2901 is preferred to be able to include a lens, a detector, a camera, excitation light, and a storage device, and preferred examples of the image acquisition device 2901 include a phase contrast microscope, a fluorescence microscope, and a confocal microscope. The information processing device is as described so far. The image acquisition module 2903, the region extraction module 2904, the region tracking module 2905, and the analysis module 2906 execute the image acquisition step, the region extraction step, the region tracking step, and the analysis step described so far, respectively.

[Other Embodiments]

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A cell image analysis method comprising:

an image acquisition step of acquiring a time-series cell image group obtained by collecting a plurality of cell images obtained at a plurality of consecutive different timings by any one of a bright-field observation method or a phase contrast observation method, in association with the plurality of consecutive different timings;
a region extraction step of extracting cell candidate regions from the plurality of cell images included in the time-series cell image group;

a region tracking step of determining whether the cell candidate regions over the plurality of cell images associated with mutually different timings which are included in the time-series cell image group correspond to the same target, collecting the cell candidate regions determined to correspond to the same target in association with the timings, and acquiring the determined cell candidate regions as a time-series cell candidate region group; and

an analysis step of analyzing information about a state of a cell based on information about the time-series cell candidate region group,

wherein the analysis step includes using a trained model, and

wherein the trained model comprises a machine learning model that has been trained, based on information about the time-series cell candidate region group and information about a state of a cell that had been acquired from cells for training, by using the information about the time-series cell candidate region group as input and the information about the state of the cell as output.

2. The cell image analysis method according to claim 1, wherein the trained model is configured to acquire the information about the state of the cell based on fluorescence luminance feature value data including at least information about a temporal change in a fluorescence luminance.

3. The cell image analysis method according to claim 2,

wherein the trained model is acquired by carrying out, for the cells for training:

a fluorescent image acquisition step of acquiring a time-series fluorescent image group obtained by collecting, in association with the timings, fluorescent images corresponding to the plurality of cell images included in the time-series cell image group;

a fluorescence luminance feature value calculation step of acquiring fluorescence luminance feature value data of the time-series cell candidate region group based on the time-series fluorescent image group;

a labeling processing step of assigning a label relating to the state of the cell to the cell candidate region based on the fluorescence luminance feature value data; and

a trained model generation step of generating the trained model through training with the information about the state of the cell based on the label relating to the state of the cell being used as output and the information about the time-series cell candidate region group being used as input, and

wherein the fluorescence luminance feature value data includes the information about at least the temporal change in the fluorescence luminance.

4. The cell image analysis method according to any one of claims 1 to 3, wherein the information about the state of the cell includes at least information on a scalar value indicating one of a binary value or a possibility indicating whether the cell candidate region is a live cell region.

5. The cell image analysis method according to any one of claims 1 to 4, wherein the information about the state of the cell includes at least information on a scalar value indicating one of a binary value or a possibility indicating whether the cell candidate region is a differentiated region.

6. The cell image analysis method according to any one of claims 1 to 5,

wherein the information about the time-series cell candidate region group comprises feature value data included in the time-series cell image group,

wherein the feature value data includes one or more selected from the group consisting of: a luminance feature value in each of the cell candidate regions of the plurality of cell images; a morphological feature value of each of the cell candidate regions; information about a temporal change in the luminance feature value; and information about a temporal change in the morphological feature value, and

wherein the feature value data comprises one of a scalar value or a vector.

7. The cell image analysis method according to any one of claims 1 to 5, wherein the information about the time-series cell candidate region group comprises time-series feature value data obtained by collecting, in association with the timings, feature value data of the cell candidate regions included in the time-series cell image group, the feature value data including one or more selected from the group consisting of: a luminance feature value in each of the cell candidate regions of the plurality of cell images; and a morphological feature value of each of the cell candidate regions.

8. The cell image analysis method according to any one of claims 1 to 5, wherein the information about the time-series cell candidate region group comprises time-series image data obtained by collecting, in association with the timings, partial cell images corresponding to the cell candidate regions over the plurality of cell images included in the time-series cell image group.

9. A cell image analysis apparatus comprising:

an image acquisition module configured to acquire a time-series cell image group obtained by collecting a plurality of cell images obtained at a plurality of consecutive different timings by any one of a bright-field observation method or a phase contrast observation method, in association with the plurality of consecutive different timings; a region extraction module configured to extract cell candidate regions from the plurality of cell images included in the time-series cell image group; a region tracking module configured to determine whether the cell candidate regions over the plurality of cell images associated with mutually different timings which are included in the time-series cell image group correspond to the same target, collect the cell candidate regions determined to correspond to the same target in association with the timings, and to acquire the determined cell candidate regions as a time-series cell candidate region group; and an analysis module configured to analyze information about a state of a cell based on information about the time-series cell candidate region group, wherein the analysis module is configured to use a trained model, and wherein the trained model comprises a machine learning model that has been trained, based on information about the time-series cell candidate region group and information about a state of a cell that had been acquired from cells for training, by using the information about the time-series cell candidate region group as input and the information about the state of the cell as output.

10. A program for causing a computer to execute the cell image analysis method of any one of claims 1 to 5 in a computer-readable format.

11. A medium having stored thereon a program of claim 10 in a computer-readable format.

12. A cell image analysis system comprising:

an image acquisition device; and an information processing device, wherein the image acquisition device is configured to acquire cell images obtained at a plurality of consecutive different timings by any one of a bright-field observation method or a phase contrast observation method, wherein the information processing device includes:

an image acquisition module configured to acquire the cell images from the image acquisition device, and acquire a time-series cell image group obtained by collecting the cell image in association with the plurality of consecutive different timings; a region extraction module configured to extract cell candidate regions from the cell images included in the time-series cell image group; a region tracking module configured to determine whether the cell candidate regions over a plurality of the cell images associated with mutually different timings which are included in the time-series cell image group correspond to the same target, collect the cell candidate regions determined to correspond to the same target in association with the timings, and to acquire the determined cell candidate regions as a time-series cell candidate region group; and an analysis module configured to analyze information about a state of a cell based on information about the time-series cell candidate region group, and

wherein the analysis module is configured to use a trained model that uses, for cells for training, the information about the time-series cell candidate region group as input and the information about the state of the cell as output.

# FIG. 1

START

IMAGE ACQUISITION STEP
ACQUIRE TIME-SERIES CELL IMAGE GROUP ~ S101

REGION EXTRACTION STEP
ACQUIRE CELL CANDIDATE REGIONS ~ S102

REGION TRACKING STEP
ACQUIRE CELL CANDIDATE REGIONS OVER PLURALITY
OF CELL IMAGES ASSOCIATED WITH DIFFERENT TIMINGS ~ S103

CALCULATE FEATURE AMOUNT OF CELL CANDIDATE REGION ~ S104

CALCULATE TIME-SERIES FEATURE AMOUNT ~ S105

ANALYSIS STEP
ACQUIRE INFORMATION ABOUT
STATE OF CELL BY TRAINED MODEL ~ S106

END

# FIG. 2

FIG. 3

EP 4 621 731 A1

# FIG. 4

# FIG. 5

500

| REGION NUMBER | TRACKING NUMBER | DIAMETER | AVERAGE VALUE OF INTENSITY | MINIMUM VALUE OF INTENSITY | DEVIATION OF INTENSITY | AVERAGE MOVING AMOUNT | AMOUNT OF CHANGE IN DIAMETER |
|---|---|---|---|---|---|---|---|
| C001 | T001 | 10.823 | 127.891 | 28.830 | 25.000 | | |
| C002 | T002 | 9.901 | 130.195 | 30.486 | 3.000 | | |
| . . . | . . . | . . . | . . . | . . . | . . . | . . . | . . . |
| C011 | T001 | 13.013 | 127.586 | 10.359 | 77.000 | | |
| C012 | T002 | 10.998 | 128.516 | 20.675 | 59.000 | | |
| . . . | . . . | . . . | . . . | . . . | . . . | . . . | . . . |
| C121 | T001 | 11.113 | 128.031 | 19.708 | 4.000 | 0.963 | 0.146 |
| C122 | T002 | 8.519 | 128.053 | 18.595 | 66.000 | 0.546 | 0.208 |
| . . . | . . . | . . . | . . . | . . . | . . . | . . . | . . . |

# FIG. 6

START

IMAGE ACQUISITION STEP
ACQUIRE TIME-SERIES CELL (PHASE DIFFERENCE
AND FLUORESCENT) IMAGE GROUP — S601

REGION EXTRACTION STEP
ACQUIRE CELL CANDIDATE REGIONS — S602

REGION TRACKING STEP
ACQUIRE CELL CANDIDATE REGIONS OVER
PLURALITY OF CELL IMAGES ASSOCIATED WITH
DIFFERENT TIMINGS — S603

CALCULATE FEATURE AMOUNT OF CELL CANDIDATE REGION — S604

CALCULATE TIME-SERIES FEATURE AMOUNT — S605

CALCULATE FLUORESCENCE INTENSITY
FEATURE OF EACH CELL CANDIDATE REGION IN
EACH FLUORESCENT IMAGE — S606

ASSIGN INFORMATION ABOUT WHETHER CELL IS
LIVE OR DEAD TO EACH CELL CANDIDATE REGION
GROUP (LABELING PROCESSING) — S607

GENERATE TRAINED MODEL — S608

END

# FIG. 7

## FIG. 8

801

| REGION NUMBER | TRACKING NUMBER | DIAMETER | AVERAGE VALUE OF INTENSITY | MINIMUM VALUE OF INTENSITY | DEVIATION OF INTENSITY | AVERAGE MOVING AMOUNT | AMOUNT OF CHANGE IN DIAMETER | AVERAGE VALUE OF FLUORESCENCE INTENSITY |
|---|---|---|---|---|---|---|---|---|
| C001 | T001 | 10.823 | 127.891 | 28.830 | 25.000 | | | 109.141 |
| C002 | T002 | 9.901 | 130.195 | 30.486 | 3.000 | | | 128.325 |
| ⋮ | ⋮ | ⋮ | ⋮ | ⋮ | ⋮ | ⋮ | ⋮ | ⋮ |
| C011 | T001 | 13.013 | 127.586 | 10.359 | 77.000 | | | 106.669 |
| C012 | T002 | 10.998 | 128.516 | 20.675 | 59.000 | | | 99.884 |
| ⋮ | ⋮ | ⋮ | ⋮ | ⋮ | ⋮ | ⋮ | ⋮ | ⋮ |
| C121 | T001 | 11.113 | 128.031 | 19.708 | 4.000 | 0.963 | 0.146 | 108.258 |
| C122 | T002 | 8.519 | 128.053 | 18.595 | 66.000 | 0.546 | 0.208 | 123.018 |
| ⋮ | ⋮ | ⋮ | ⋮ | ⋮ | ⋮ | ⋮ | ⋮ | ⋮ |

FIG. 9

901

# FIG. 10

1000

| TRACKING NUMBER | FLUORESCENCE INTENSITY AT BEGINNING OF DEAD CELL STAINING | FLUORESCENCE INTENSITY AT END OF DEAD CELL STAINING | MAXIMUM VALUE OF AMOUNT OF CHANGE IN FLUORESCENCE INTENSITY DUE TO DEAD CELL STAINING | MAXIMUM VALUE OF FLUORESCENCE INTENSITY DUE TO LIVE CELL STAINING |
|---|---|---|---|---|
| T001 | 104.036 | 110.713 | 0.767 | 439.988 |
| T002 | 2725.662 | 1505.971 | 7.674 | 74.682 |
| T003 | 105.145 | 929.300 | 41.018 | 99.891 |
| T004 | 107.327 | 120.415 | 2.269 | 57.181 |
| . . . | . . . | . . . | . . . | . . . |

# FIG. 11

1100

| TRACKING NUMBER | FLUORESCENCE INTENSITY AT BEGINNING OF DEAD CELL STAINING | FLUORESCENCE INTENSITY AT END OF DEAD CELL STAINING | MAXIMUM VALUE OF AMOUNT OF CHANGE IN FLUORESCENCE INTENSITY DUE TO DEAD CELL STAINING | MAXIMUM VALUE OF FLUORESCENCE INTENSITY DUE TO LIVE CELL STAINING | LABEL |
|---|---|---|---|---|---|
| T001 | 104.036 | 110.713 | 0.767 | 439.988 | 0 |
| T002 | 2725.662 | 1505.971 | 7.674 | 74.682 | 1 |
| T003 | 105.145 | 929.300 | 41.018 | 99.891 | 2 |
| T004 | 107.327 | 120.415 | 2.269 | 57.181 | 3 |
| ⋮ | ⋮ | ⋮ | ⋮ | ⋮ | ⋮ |

# FIG. 12

1200

| REGION NUMBER | REGION NUMBER | DIAMETER | AVERAGE VALUE OF INTENSITY | MINIMUM VALUE OF INTENSITY | DEVIATION OF INTENSITY | AVERAGE MOVING AMOUNT | AMOUNT OF CHANGE IN DIAMETER | AVERAGE VALUE OF FLUORESCENCE INTENSITY | LABEL |
|---|---|---|---|---|---|---|---|---|---|
| C001 | T001 | 10.823 | 127.891 | 28.830 | 25.000 | | | 109.141 | 0 |
| C002 | T002 | 9.901 | 130.195 | 30.486 | 3.000 | | | 128.325 | 1 |
| . . . | . . . | . . . | . . . | . . . | . . . | . . . | . . . | . . . | . . . |
| C011 | T001 | 13.013 | 127.586 | 10.359 | 77.000 | | | 106.669 | 0 |
| C012 | T002 | 10.998 | 128.516 | 20.675 | 59.000 | | | 99.884 | 1 |
| . . . | . . . | . . . | . . . | . . . | . . . | . . . | . . . | . . . | . . . |
| C121 | T001 | 11.113 | 128.031 | 19.708 | 4.000 | 0.963 | 0.146 | 108.258 | 0 |
| C122 | T002 | 8.519 | 128.053 | 18.595 | 66.000 | 0.546 | 0.208 | 123.018 | 1 |
| . . . | . . . | . . . | . . . | . . . | . . . | . . . | . . . | . . . | . . . |

# FIG. 13

1301

LABEL: LIVE CELL

1302

LABEL: DEAD CELL

1303

LABEL: CELL CHANGED IN
LIVE OR DEAD STATE

1304

LABEL: NON-CELL

EP 4 621 731 A1

FIG. 14

1400

| REGION NUMBER | TRACKING NUMBER | DIAMETER | AVERAGE VALUE OF INTENSITY | MINIMUM VALUE OF INTENSITY | DEVIATION OF INTENSITY | AVERAGE MOVING AMOUNT | AMOUNT OF CHANGE IN DIAMETER | BINARY VALUE (LABEL "0") | BINARY VALUE (LABEL "1") | BINARY VALUE (LABEL "3") | DETERMINATION RESULT |
|---|---|---|---|---|---|---|---|---|---|---|---|
| C001 | T001 | 10.823 | 127.891 | 28.830 | 25.000 | - | - | - | - | - | - |
| C002 | T002 | 9.901 | 130.195 | 30.486 | 3.000 | - | - | - | - | - | - |
| ⋮ | ⋮ | ⋮ | ⋮ | ⋮ | ⋮ | ⋮ | ⋮ | ⋮ | ⋮ | ⋮ | ⋮ |
| C011 | T001 | 13.013 | 127.586 | 10.359 | 77.000 | - | - | - | - | - | - |
| C012 | T002 | 10.998 | 128.516 | 20.675 | 59.000 | - | - | - | - | - | - |
| ⋮ | ⋮ | ⋮ | ⋮ | ⋮ | ⋮ | ⋮ | ⋮ | ⋮ | ⋮ | ⋮ | ⋮ |
| C121 | T001 | 11.113 | 128.031 | 19.708 | 4.000 | 0.963 | 0.146 | 1 | 0 | 0 | 0 |
| C122 | T002 | 8.519 | 128.053 | 18.595 | 66.000 | 0.546 | 0.208 | 0 | 1 | 0 | 1 |
| ⋮ | ⋮ | ⋮ | ⋮ | ⋮ | ⋮ | ⋮ | ⋮ | ⋮ | ⋮ | ⋮ | ⋮ |

EP 4 621 731 A1

# FIG. 15

1500

EP 4 621 731 A1

| REGION NUMBER | TRACKING NUMBER | DIAMETER | AVERAGE VALUE OF INTENSITY | MINIMUM VALUE OF INTENSITY | DEVIATIO OF INTENSITY | AVERAGE MOVING AMOUNT | AMOUNT OF CHANGE IN DIAMETER | LIKELIHOOD (LABEL "0") | LIKELIHOOD (LABEL "1") | LIKELIHOOD (LABEL "3") | DETERMINATION RESULT |
|---|---|---|---|---|---|---|---|---|---|---|---|
| C001 | T001 | 10.823 | 127.891 | 28.830 | 25.000 | - | - | - | - | - | - |
| C002 | T002 | 9.901 | 130.195 | 30.486 | 3.000 | - | - | - | - | - | - |
| . . . | . . . | . . . | . . . | . . . | . . . | . . . | . . . | . . . | . . . | . . . | . . . |
| C011 | T001 | 13.013 | 127.586 | 10.359 | 77.000 | - | - | - | - | - | - |
| C012 | T002 | 10.998 | 128.516 | 20.675 | 59.000 | - | - | - | - | - | - |
| . . . | . . . | . . . | . . . | . . . | . . . | . . . | . . . | . . . | . . . | . . . | . . . |
| C121 | T001 | 11.113 | 128.031 | 19.708 | 4.000 | 0.963 | 0.146 | 0.6 | 0.3 | 0.1 | 0 |
| C122 | T002 | 8.519 | 128.053 | 18.595 | 66.000 | 0.546 | 0.208 | 0.0 | 0.6 | 0.4 | 1 |
| . . . | . . . | . . . | . . . | . . . | . . . | . . . | . . . | . . . | . . . | . . . | . . . |

# FIG. 16

FIG. 17

D1700

FLUORESCENCE INTENSITY
EATURE AMOUNT DATA GROUP
WITHOUT LABELS

S1701

FIRST LABELING PROCESSING

D1701a

FLUORESCENCE INTENSITY
FEATURE AMOUNT DATA GROUP
(LABEL: LIVE CELL OR NON-CELL)

D1701b

FLUORESCENCE INTENSITY
FEATURE AMOUNT DATA GROUP
(LABEL: DEAD CELL)

D1701c

FLUORESCENCE INTENSITY
FEATURE AMOUNT DATA GROUP
(LABEL: CELL CHANGED IN LIVE
OR DEAD STATE)

S1702

SECOND LABELING PROCESSING

D1702a

FLUORESCENCE INTENSITY
FEATURE AMOUNT DATA GROUP
(LABEL: LIVE CELL)

D1702b

FLUORESCENCE INTENSITY
FEATURE AMOUNT DATA GROUP
(LABEL: NON-CELL)

D1701

FLUORESCENCE INTENSITY
FEATURE AMOUNT DATA
GROUP WITH LABELS

EP 4 621 731 A1

# FIG. 18

# FIG. 19

1901

LABEL: NON-CELL

NUMBER OF CULTURE DAYS [DAYS]

1902

LABEL: CELL DEBRIS

NUMBER OF CULTURE DAYS [DAYS]

# FIG. 20

START

IMAGE ACQUISITION STEP
ACQUIRE TIME-SERIES CELL IMAGE GROUP — S2001

REGION EXTRACTION STEP
ACQUIRE CELL CANDIDATE REGIONS — S2002

REGION TRACKING STEP
ACQUIRE CELL CANDIDATE REGIONS OVER
PLURALITY OF CELL IMAGES ASSOCIATED
WITH DIFFERENT TIMINGS — S2003

CALCULATE FEATURE AMOUNT OF
EACH CELL CANDIDATE REGION — S2004

ANALYSIS STEP
ACQUIRE INFORMATION ABOUT STATE OF
CELL BY TRAINED MODEL — S2005

END

# FIG. 21A

2100

| REGION NUMBER | TRACKING NUMBER | DIAMETER | AVERAGE VALUE OF INTENSITY | MINIMUM VALUE OF INTENSITY | DEVIATION OF INTENSITY |
|---|---|---|---|---|---|
| C001 | T001 | 10.823 | 127.891 | 28.830 | 25.000 |
| C002 | T002 | 9.901 | 130.195 | 30.486 | 3.000 |
| . | . | . | . | . | . |
| . | . | . | . | . | . |
| . | . | . | . | . | . |
| C011 | T001 | 13.013 | 127.586 | 10.359 | 77.000 |
| C012 | T002 | 10.998 | 128.516 | 20.675 | 59.000 |
| . | . | . | . | . | . |
| . | . | . | . | . | . |
| . | . | . | . | . | . |
| C121 | T001 | 11.113 | 128.031 | 19.708 | 4.000 |
| C122 | T002 | 8.519 | 128.053 | 18.595 | 66.000 |
| . | . | . | . | . | . |
| . | . | . | . | . | . |
| . | . | . | . | . | . |

# FIG. 21B

2101

### DT001

| REGION NUMBER | TRACKING NUMBER | DIAMETER | AVERAGE VALUE OF INTENSITY | MINIMUM VALUE OF INTENSITY | DEVIATION OF INTENSITY |
|---|---|---|---|---|---|
| C011 | T001 | 13.013 | 127.586 | 10.359 | 77.000 |
| . . . | . . . | . . . | . . . | . . . | . . . |
| C121 | T001 | 11.113 | 128.031 | 19.708 | 4.000 |

### DT002

| REGION NUMBER | TRACKING NUMBER | DIAMETER | AVERAGE VALUE OF INTENSITY | MINIMUM VALUE OF INTENSITY | DEVIATION OF INTENSITY |
|---|---|---|---|---|---|
| C012 | T002 | 10.998 | 128.516 | 20.675 | 59.000 |
| . . . | . . . | . . . | . . . | . . . | . . . |
| C122 | T002 | 8.519 | 128.053 | 18.595 | 66.000 |

.

.

.

# FIG. 21C

2102

RT001

| REGION NUMBER | TRACKING NUMBER | BINARY VALUE (LABEL "0") | BINARY VALUE (LABEL "1") | BINARY VALUE (LABEL "3") |
|---|---|---|---|---|
| C121 | T001 | 0 | 1 | 0 |

RT002

| REGION NUMBER | TRACKING NUMBER | BINARY VALUE (LABEL "0") | BINARY VALUE (LABEL "1") | BINARY VALUE (LABEL "3") |
|---|---|---|---|---|
| C122 | T002 | 1 | 0 | 0 |

.

.

.

# FIG. 22

START

IMAGE ACQUISITION STEP
ACQUIRE TIME-SERIES CELL (PHASE CONTRAST
AND FLUORESCENT) IMAGE GROUP ⟋ S2201

REGION EXTRACTION STEP
ACQUIRE CELL CANDIDATE REGIONS ⟋ S2202

REGION TRACKING STEP
ACQUIRE CELL CANDIDATE REGIONS OVER
PLURALITY OF CELL IMAGES ASSOCIATED
WITH DIFFERENT TIMINGS ⟋ S2203

CALCULATE FEATURE AMOUNT OF
CELL CANDIDATE REGION ⟋ S2204

CALCULATE FLUORESCENCE INTENSITY
FEATURE OF EACH CELL CANDIDATE REGION
IN EACH FLUORESCENT IMAGE ⟋ S2205

ASSIGN INFORMATION ABOUT WHETHER CELL IS
LIVE OR DEAD TO EACH CELL CANDIDATE
REGION GROUP (LABELING PROCESSING) ⟋ S2206

GENERATE TRAINED MODEL ⟋ S2207

END

# FIG. 23

```
        ┌──────────────┐
        │    START     │
        └──────┬───────┘
               │
   ┌───────────┴────────────┐
   │   IMAGE ACQUISITION STEP │ ───── S2301
   │   ACQUIRE TIME-SERIES CELL │
   │   (PHASE CONTRAST AND     │
   │   FLUORESCENT) IMAGE GROUP │
   └───────────┬────────────┘
               │
   ┌───────────┴────────────┐
   │   REGION EXTRACTION STEP │ ───── S2302
   │   ACQUIRE CELL CANDIDATE REGIONS │
   └───────────┬────────────┘
               │
   ┌───────────┴────────────┐
   │   REGION TRACKING STEP   │ ───── S2303
   │   ACQUIRE CELL CANDIDATE REGIONS OVER │
   │   PLURALITY OF CELL IMAGES ASSOCIATED WITH │
   │   DIFFERENT TIMINGS │
   └───────────┬────────────┘
               │
   ┌───────────┴────────────┐
   │   ANALYSIS STEP          │ ───── S2304
   │   ACQUIRE INFORMATION ABOUT STATE │
   │   OF CELL BY TRAINED MODEL │
   └───────────┬────────────┘
               │
        ┌──────┴───────┐
        │     END      │
        └──────────────┘
```

# FIG. 24A

S2401     S2401a

CULTURE TIME

| 0 HOURS | 1 HOUR | 12 HOURS | 51 HOURS |

T001 ···· C001   C011 ··· C012   C051

T002 ···· C002   C012 ··· C122   C511

2401b

# FIG. 24B

2402

2402a

| REGION NUMBER | TRACKING NUMBER | BINARY VALUE (LABEL "0") | BINARY VALUE (LABEL "1") | BINARY VALUE (LABEL "3") |
|---|---|---|---|---|
| C121 | T001 | 0 | 1 | 0 |

2402b

| REGION NUMBER | TRACKING NUMBER | BINARY VALUE (LABEL "0") | BINARY VALUE (LABEL "1") | BINARY VALUE (LABEL "3") |
|---|---|---|---|---|
| C122 | T002 | 1 | 0 | 0 |

.

.

.

# FIG. 25

```
┌─────────────┐
│    START    │
└─────────────┘
       │
┌──────────────────────────────────────────┐
│          IMAGE ACQUISITION STEP          │ ── S2501
│ ACQUIRE TIME-SERIES CELL (PHASE CONTRAST │
│    AND FLUORESCENT) IMAGE GROUP          │
└──────────────────────────────────────────┘
       │
┌──────────────────────────────────────────┐
│          REGION EXTRACTION STEP          │ ── S2502
│      ACQUIRE CELL CANDIDATE REGIONS      │
└──────────────────────────────────────────┘
       │
┌──────────────────────────────────────────┐
│           REGION TRACKING STEP           │ ── S2503
│  ACQUIRE CELL CANDIDATE REGIONS OVER     │
│  PLURALITY OF CELL IMAGES ASSOCIATED     │
│        WITH DIFFERENT TIMINGS            │
└──────────────────────────────────────────┘
       │
┌──────────────────────────────────────────┐
│   CALCULATE FLUORESCENCE INTENSITY       │ ── S2504
│ FEATURE OF EACH CELL CANDIDATE REGION    │
│       IN EACH FLUORESCENT IMAGE          │
└──────────────────────────────────────────┘
       │
┌──────────────────────────────────────────┐
│ ASSIGN INFORMATION ABOUT WHETHER CELL IS │ ── S2505
│   LIVE OR DEAD TO EACH CELL CANDIDATE    │
│   REGION GROUP (LABELING PROCESSING)     │
└──────────────────────────────────────────┘
       │
┌──────────────────────────────────────────┐
│         GENERATE TRAINED MODEL           │ ── S2506
└──────────────────────────────────────────┘
       │
┌─────────────┐
│     END     │
└─────────────┘
```

# FIG. 26

# FIG. 27

# FIG. 28

IMAGE ACQUISITION MODULE
ACQUIRE TIME-SERIES CELL IMAGE GROUP — 2801

REGION EXTRACTION MODULE
ACQUIRE CELL CANDIDATE REGIONS — 2802

REGION TRACKING MODULE
ACQUIRE CELL CANDIDATE REGIONS OVER
PLURALITY OF CELL IMAGES ASSOCIATED
WITH DIFFERENT TIMINGS — 2803

ANALYSIS MODULE
ACQUIRE INFORMATION ABOUT
STATE OF CELL BY TRAINED MODEL — 2804

# FIG. 29

2901

```
IMAGE ACQUISITION
DEVICE
```

2902

```
INFORMATION
PROCESSING
DEVICE
```

2903

```
IMAGE ACQUISITION MODULE
ACQUIRE TIME-SERIES CELL IMAGE GROUP
```

2904

```
REGION EXTRACTION MODULE
ACQUIRE CELL CANDIDATE REGIONS
```

2905

```
REGION TRACKING MODULE
ACQUIRE CELL CANDIDATE REGIONS
OVER PLURALITY OF CELL IMAGES ASSOCIATED
WITH DIFFERENT TIMINGS
```

2906

```
ANALYSIS MODULE
ACQUIRE INFORMATION ABOUT STATE
OF CELL BY TRAINED MODEL
```

FIG. 30

3000

| No. | MINIMUM VALUE OF INTENSITY | DEVIATION OF INTENSITY | DIAMETER | AMOUNT OF CHANGE IN DIAMETER | AVERAGE MOVING AMOUNT | ACCURACY RATE (LIVE CELL) | ACCURACY RATE (NON-LIVE CELL) | F1-SCORE |
|---|---|---|---|---|---|---|---|---|
| 1 | ◯ | ◯ | — | — | — | 0.218 | 0.975 | 0.676 |
| 2 | ◯ | ◯ | ◯ | — | — | 0.935 | 0.966 | 0.946 |
| 3 | ◯ | ◯ | ◯ | ◯ | ◯ | 0.986 | 0.953 | 0.968 |

FIG. 31

# FIG. 32

# FIG. 33

3300

| MODEL NO. | DIAMETER | INTENSITY FEATURE | AMOUNT OF CHANGE IN DIAMETER | AVERAGE MOVING AMOUNT | EVALUATION RESULTS (0 TO 11h) | | | EVALUATION RESULTS (12h OR MORE) | | |
|---|---|---|---|---|---|---|---|---|---|---|
| | | | | | ACCURACY RATE (LIVE CELL) | ACCURACY RATE (NON-LIVE CELL) | F1-SCORE | ACCURACY RATE (LIVE CELL) | ACCURACY RATE (NON-LIVE CELL) | F1-SCORE |
| 1 | — | ○ | — | — | 0.734 | 0.816 | 0.773 | 0.910 | 0.783 | 0.828 |
| 2 | ○ | — | — | — | 0.971 | 0.962 | 0.965 | 0.984 | 0.964 | 0.972 |
| 3 | ○ | ○ | — | — | 0.941 | 0.969 | 0.953 | 0.990 | 0.969 | 0.978 |
| 4 | ○ | ○ | ○ | ○ | — | — | — | 0.988 | 0.981 | 0.983 |

EP 4 621 731 A1

FIG. 34

FIG. 35

Europäisches Patentamt

European Patent Office

Office européen des brevets

## EUROPEAN SEARCH REPORT

**Application Number**

EP 25 16 3482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI HENG ET AL: "A modeling strategy for cell dynamic morphology classification based on local deformation patterns", BIOMEDICAL SIGNAL PROCESSING AND CONTROL, ELSEVIER, AMSTERDAM, NL, [Online] vol. 54, 27 July 2019 (2019-07-27), XP085794197, ISSN: 1746-8094, DOI: 10.1016/J.BSPC.2019.101587 Retrieved from the Internet: URL:https://www.sciencedirect.com/science/article/pii/S1746809419301673/pdfft?md5=5b5d608cc65bc0a7c83f3231821894a2&pid=1-s2.0-S1746809419301673-main.pdf> [retrieved on 2019-07-27] | 1,5-12 | INV. G06V10/62 G06V20/69 |
| Y | * sections 2.1, 2.2; 2.2.1, figure 4, section 3 * | 2-4 | |
| X | VICAR TOMAS ET AL: "The Quantitative-Phase Dynamics of Apoptosis and Lytic Cell Death", SCIENTIFIC REPORTS, [Online] vol. 10, no. 1, 31 January 2020 (2020-01-31), XP093290660, US ISSN: 2045-2322, DOI: 10.1038/s41598-020-58474-w Retrieved from the Internet: URL:https://www.nature.com/articles/s41598-020-58474-w> [retrieved on 2025-06-27] | 1-12 | **TECHNICAL FIELDS SEARCHED (IPC)** G06V |
| Y | * figures 1 and 2, page 2, section Cell dry mass tracking; section Feature extraction; page 6, 1st full paragraph, last sentence; page 5, 1st paragraph * | 2-4 | |

-/--

The present search report has been drawn up for all claims

| Place of search | Date of completion of the search | Examiner |
|---|---|---|
| The Hague | 3 July 2025 | Loza, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                             
& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 16 3482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HEE JUNE CHOI ET AL: "Emerging machine learning approaches to phenotyping cellular motility and morphodynamics", PHYSICAL BIOLOGY, INSTITUTE OF PHYSICS PUBLISHING, BRISTOL, GB, vol. 18, no. 4, 17 June 2021 (2021-06-17), page 41001, XP020366974, ISSN: 1478-3975, DOI: 10.1088/1478-3975/ABFFBE [retrieved on 2021-06-17] * page 6, 1st full paragraph, last sentence * | 5 | |
| A | ANINDYA GUPTA ET AL: "Deep Learning in Image Cytometry: A Review", CYTOMETRY A, WILEY-LISS, HOBOKEN, USA, [Online] vol. 95, no. 4, 19 December 2018 (2018-12-19), pages 366-380, XP072332205, ISSN: 1552-4922, DOI: 10.1002/CYTO.A.23701 [retrieved on 2025-06-27] * paragraph bridging pages 374 and 375, page 375, left column, 2nd full paragraph * | 5 | |
| A | HENG LI ET AL: "Cell dynamic morphology classification using deep convolutional neural networks", CITOMETRY PART A,, vol. 93A, 15 May 2018 (2018-05-15), pages 628-638, XP002789256, DOI: 10.1002/CYTO.A.23490 * figure 2 * | 7 | TECHNICAL FIELDS SEARCHED (IPC) |

The present search report has been drawn up for all claims

| Place of search | Date of completion of the search | Examiner |
|---|---|---|
| The Hague | 3 July 2025 | Loza, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**EP 4 621 731 A1**

**Patent documents cited in the description**

- JP 2017085966 A

- JP 2015210212 A